# EUROPEAN PATENT APPLICATION

(11) **EP 4 674 398 A2**
(43) Date of publication of application: **07.01.2026**
(21) Application number: 25202606.7
(22) Date of filing: 22.10.2021
(51) Int. Cl.: A61G 7/057

(54) **SMART MATTRESS WITH ADAPTIVE ACTUATION SYSTEM**

(30) Priority: 23.10.2020 US 202063105129 P
(62) Divisional of application: 21882235.1
(71) Applicant: Prohibition X PTE. Ltd., Singapore 048619 (SG)
(72) Inventor: NEWMAN, Stephen D., Singapore 469978 (SG)
(74) Representative: McKinnon, Alistair James

(57) **Abstract**

A smart mattress and adaptive actuation systems for a flexible fabric are disclosed. The mattress can include a flexible fabric associated with a sleeping surface configured to engage a user arranged in a lying position. An actuation assembly can be configured to manipulate the sleeping surface. In one example, the actuation assembly includes a flexible bladder containing a fluid, and a pair of electrodes at least partially separated by the flexible bladder. The pair of electrodes can be configured to manipulate the fluid for changing a shape of the flexible bladder, and the sleeping surface can be responsive to the shape of the flexible bladder. The actuation assembly can also include an array of shapeable materials that change shape upon the receipt of heat. The sleeping surface can be responsive to the shape of the shapeable materials.

## Description

### CROSS-REFERENCE TO RELATED APPLICATIONS

This application claims priority to and the benefit of U.S. Provisional Patent Application No. 63/105,129 filed October 23, 2020 entitled "SMART MATTRESS WITH ADAPTIVE ACTUATION SYSTEM", the entire disclosure of which is incorporated herein in its entirety by reference.

### FIELD

The described embodiments relate generally to actuation systems for fabric, and more particularly, to systems and techniques for adaptively controlling characteristics of a smart mattress or other cushioning device.

### BACKGROUND

Conventional smart mattresses utilize automatic air-filled bladders or cells to adjust the firmness of a mattress to a user preference. Air-filled bladders are often poorly suited to support a user and/or to adapt to movements of the user. Rather than help maintain spinal support, the conventional air-filled bladders can be easily deformed and create a sensation of displacing air, which can lead to the user being unintentionally rolled. Conventional smart mattresses can also suffer from a variety of drawbacks that result from an overall complex design and reliance on high-power-consumption motors to adjust air pressure in an individual cell. Leaks in the bladder, power failures, wear, and so on can cause deflation of conventional systems and contribute to generally poorer reliability that detracts from the user experience.

### SUMMARY

In one example, a mattress is disclosed. The mattress includes a sleeping surface configured to engage a user arranged in a lying position. The mattress includes an actuation assembly configured to manipulate the sleeping surface. The actuation assembly includes a flexible bladder containing a fluid. The actuation assembly includes a pair of electrodes at least partially separated by the flexible bladder. The pair of electrodes are configured to manipulate the fluid for changing a shape of the flexible bladder. The sleeping surface is responsive to the shape of the flexible bladder.

In another example, the flexible bladder and the pair of electrodes can be components of a Peano-HASEL actuator. A stiffness of the sleeping surface can be responsive to the shape of the flexible bladder. In a first configuration, the flexible bladder can have a first shape. In a second configuration, the flexible bladder can have a second shape. In response to an electrical charge, the pair of electrodes can move toward one another and can cause the flexible bladder to transition between the first shape and the second shape.

In some examples, the second shape can have a height that is greater than a height of the first shape. The sleeping surface can be deformed by the flexible bladder having the height of the second shape. Further, the second shape can have a length that is less than a length of the first shape. The sleeping surface can be deformed by the flexible bladder having the length of the second shape.

In another example, the pair of electrodes can be configured to compress a portion of the flexible bladder in response to a receipt of an electrical charge, thereby displacing the fluid within the flexible bladder. Further, the flexible bladder can be a first flexible bladder having a first fluid, and the pair of electrodes can be a first pair of electrodes. In this regard, the actuation assembly can further include a second flexible bladder containing a second fluid. The actuation assembly can further include a second pair of electrodes at least partially separated by the second flexible bladder. The second pair of electrodes can be configured to manipulate the fluid for changing a shape of the second flexible bladder. Further, the sleeping surface can be responsive to the shape of the second flexible bladder.

In some examples, the first and second bladders can form a continuous cavity having a first bulbous portion and a second bulbous portion. The first and second pairs of electrodes can be interposed with the first and second bulbous portions. In this regard, the actuation assembly can be a first actuation assembly. The mattress can further include a third actuation assembly arranged in a matrix with the first actuation assembly. The third actuation assembly can include a third flexible bladder arranged in a spatially offset configuration from the first and second flexible bladders of the first actuation assembly.

In another example, the mattress can further include a sensor configured to detect a user input. The pair of electrodes can be configured to manipulate the fluid for changing the shape of the flexible bladder in response to the user input. The user input can include an audible input or a force input. Where the user input is an audible input, in response to the audible input exceeding a threshold value, the pair of electrodes can manipulate the fluid for defining a transitioned shaped of the flexible bladder. In this regard, the sleeping surface can be deformed by the flexible bladder being in the transitioned shape such that the sleeping surface gently rolls the user in the lying position. Where the user input is a force input, the force input can displace the pair of electrodes. The sensor can be configured to detect the user input based on a change in capacitance between the pair of electrodes.

In another example, a mattress is disclosed. The mattress can include a sleeping surface configured to engage a user arranged in a lying position. The mattress further includes an actuation assembly configured to manipulate the sleeping surface. The actuation assembly includes a shapeable material configured for repeated transitioning between a first shape and a second shape in response to the shapeable material receiving energy from an energy source. The sleeping surface is responsive to the shapeable material being in the first shape or the second shape.

In another example, the energy source can include a light source. The light source can be configured to emit light directed toward the shapeable material. The shapeable material can be configured to transition from the first shape to the second shape upon the receipt of light from the light source. The shapeable material can be configured to transition from the second shape to the first shape upon the cessation of light from the light source. In some examples, the light source can include light waves in one or both of an ultraviolet or a visible spectrum.

In some examples, the shapeable material can include a photopolymer or light activated resin. Additionally, the energy source can include a heat source. The heat source can be configured to emit heat directed toward the shapeable material. The shapeable material can be configured to transition from the first shape to the second shape upon the receipt of heat from the heat source. The heat source can be configured to emit heat via Joule heating.

In another example, the shapeable material can include a blend of high-strength polymer fishing lines and sewing thread. The shapeable material can be defined by a coiled structure. The coiled structure can have a first length when the shapeable material is in the first shape. Further, the coiled structure can have a second length when the shapeable material is in the second shape. The second length can be 50% or less than the second length.

In other examples, the shapeable material can be a first shapeable material of a plurality of shapeable materials. The plurality of shapeable materials can be arranged in a base frame to collectively support the sleeping surface. Further, the plurality of shapeable materials can define a series of slats disposed along a length of the sleeping surface. One or more slats of the series of slats extends along a width of the sleeping surface.

In another example, the shapeable material can define a cilia-like structure. The cilia-like structure can have a free end. The free end can be in a first position when the shapeable material is in the first shape. The free end can be in a second position when the shapeable material is in the second shape. In this regard, the sleeping surface can be deformed by the free end of the cilia-like structure being in the second position. The cilia-like structure can be at least partially encased in a gel.

In another example, the actuation assembly can be a first actuation assembly. A first portion of the sleeping surface can be responsive to the first actuation assembly. The mattress can further include a second actuation assembly. A second portion of the sleeping surface can be responsive to the second actuation assembly.

In another example, a flexible fabric is disclosed. The flexible fabric includes a flexible outer layer. The flexible fabric includes a pair of electrodes integrated with the flexible outer layer. The flexible fabric includes a flexible bladder holding a fluid. The pair of electrodes can be operable to compress the flexible bladder and displace the fluid. The flexible outer layer can be configured to stretch upon the displacement of the fluid.

In other examples, the flexible bladder and the pair of electrodes can be components of a Peano-HASEL actuator. The flexible bladder and the pair of electrodes can be at least partially encased in a gel. The gel can define a finger-link appendage. The pair of electrodes and the flexible bladder can be components of a first actuation assembly. The finger-link appendage can be one of a series of finger-link appendages, each having another actuation assembly. In some cases, the gel can be enmeshed with a portion of the flexible fabric.

In other examples, in a first configuration, the flexible bladder can have a first shape. Further, in a second configuration, the flexible bladder can have a second shape. In response to an electrical charge, the pair of electrodes move toward one another and cause the flexible bladder to transition between the first shape and the second shape. The flexible fabric can be stretched by the flexible bladder being in the second shape.

In another example, the flexible fabric further can further include a sensor configured to detect a user input. In this regard, the pair of electrodes can be configured to manipulate the fluid for changing a shape of the flexible bladder in response to the user input.

In another example, a mattress is disclosed. The mattress includes a flexible fabric, such as any of the flexible fabrics described herein. The flexible fabric can define a sleeping surface configured to engage a user arranged in a lying position. The stretching of the flexible outer layer can be configured to cause movement of the user.

In another example, a hospital bed is disclosed. The hospital bed can include a flexible fabric, such as any of the flexible fabrics described herein. The flexible fabric can define a recovery surface configured to engage a user arranged in a convalescing position. The stretching of the flexible outer layer can be configured to cause movement of the user. The movement can be configured to rotate the user for the prevention for bed sores.

In another example, a surgical table is disclosed. The surgical table can include a flexible fabric, such as any of the flexible fabrics described herein. The flexible fabric can define a surgical surface configuration to engage a user arranged in a surgical position. The stretching of the flexible outer later can be configured to cause movement of the user. The movement can be configured to arrange the user into a position adapted to conduct a surgical operation on the user. The stretching can be caused in response to a signal from a computing device. The signal can be prompted in response to a preprogrammed surgical routine. The signal can be prompted in response to an input from a medical professional.

In another example, a car seat is disclosed. The car seat includes a flexible fabric, such as any of the flexible fabrics described herein. The flexible fabric can define a sitting surface configured to engage a user arranged in a seated position. The stretching of the flexible outer layer can be configured to cause movement of the user.

In another example, a garment is disclosed. The garment includes a flexible fabric, such as any of the flexible fabrics described herein. The flexible fabric can be configured to be worn by a user. The stretching of the flexible outer layer can be configured to resist movement of the user.

In another example, an insole is disclosed. The insole includes a flexible fabric, such as any of the flexible fabrics described herein. The flexible fabric can define a stepping surface configured to engage a foot of a user. The stretching of the flexible outer layer can be configured to cause movement of the foot of the user.

In another example, a bullet-proof vest is disclosed. The bullet-proof vest includes a flexible fabric, such as any of the flexible fabrics described herein. The stretching of the flexible outer layer can be configured to resist movement of the user.

In another example, a method for manipulating a flexible fabric is disclosed. The method includes transitioning a flexible bladder from a first shape to a second shape by compressing a portion of the flexible bladder between a pair of electrodes. The method further includes, in response to the flexible bladder being in the second shape, causing a deformation of a flexible fabric.

In another example, the method can further include applying an electric charge to the pair of electrodes to move the pair of electrodes closer to one another. The method can further include detecting a user input, the user input including an audible input or a force input. In this regard, the transitioning can occur in response to the detection of the user input.

In some examples, the flexible fabric can define a sleeping surface configured to engage a user arranged in a lying position. The user input can be an audible input. The method can further include, in response to the audible input, such as a snore, rolling the user using the deformation of the flexible fabric. Additionally or alternatively, the flexible fabric can define a sleeping surface configured to engage a user arranged in a lying position. The user input can be a force input. The detecting of the user input can further include detecting a pressure distribution of the user on the sleeping surface. In some examples, the detecting of the pressure distribution can include using a wavefront sensor to measure localized movements of the user.

In another example, in response to the flexible bladder being in the second shape, flexible bladder can be pressed against the flexible fabric. The method can further include stiffening the flexible fabric using the deformation caused by the flexible bladder being the second shape.

In another example, the first shape can have a first dimension. The second shape can have a second dimension larger than the first dimension. The transitioning further includes transitioning the flexible bladder into an intermediate shape having an intermediate dimension. The intermediate dimension can be greater than the first dimension and less than the second dimension. The causing of the deformation can further include causing an amount of deformation of the flexible fabric corresponding to a dimension of the flexible bladder being the first, second, or third dimension. The deformation can be a localized deformation of the flexible fabric.

In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 depicts an example mattress;
FIG. 2 depicts a functional diagram of an adaptive actuation system;
FIG. 3A depicts an example mattress with the adaptive actuation system of FIG. 2 and having a user arranged in a first lying position;
FIG. 3B depicts the mattress of FIG. 3A with the user arranged in a second lying position;
FIG. 4A depicts a flexible fabric with an actuation assembly in a first configuration;
FIG. 4B depicts the flexible fabric of FIG. 4A with the actuation system in a second configuration;
FIG. 4C depicts the flexible fabric of FIG. 4A with another example actuation system;
FIG. 5A depicts another flexible fabric with an actuation system in a first configuration;
FIG. 5B depicts the flexible fabric of FIG. 5A with the actuation system in a second configuration;
FIG. 5C depicts the flexible fabric of FIG. 5A with another example actuation system;
FIG. 6 depicts another example flexible fabric having an array of shapeable materials;
FIG. 7A depicts an example shapeable material in a first configuration;
FIG. 7B depicts the shapeable material of FIG. 7B in a second configuration;
FIG. 8 depicts a schematic diagram of a photopolymer or light activated resin;
FIG. 9A depicts another example shapeable material in a first configuration;
FIG 9B depicts the shapeable material of FIG. 9A in a second configuration;
FIG. 9C depicts the shapeable materials of FIGS. 9A and 9B arranged for supporting a mattress;
FIG. 10A depicts an example wavefront sensor measuring a first wavefront;
FIG. 10B depicts the example wavefront sensor measuring a second wavefront;
FIG. 11A depicts a sleep system with an adaptive actuation system and having a user arranged in a first lying position;
FIG. 11B depicts the sleep system of FIG. 11A having the user arranged in a first lying position;
FIG. 11C depicts a schematic view of the sleep system of FIG. 11A;
FIG. 12A depicts a first user interface of an electronic device configured to operate the sleep system of FIG. 11A;
FIG. 12B depicts a second user interface of an electronic device configured to operate the sleep system of FIG. 11B;
FIG. 12C depicts a first user interface of an electronic device configured to operate the sleep system of FIG. 11C;
FIG. 13A depicts a medical table with an adaptive actuation system and having a user arranged in a first convalescing position;
FIG. 13B depicts the medical table of FIG. 13A having the user arranged in a second convalescing position;
FIG. 14A depicts a surgical table with an adaptive actuation system and having a user arranged in a first surgical position;
FIG. 14B depicts the surgical table of FIG. 14A having the user arranged in a second surgical position;
FIG. 15A depicts a car seat with an adaptive actuation system and having a user arranged in a first seated position;
FIG. 15B depicts the car seat of FIG. 15A having the user arranged in a second seated position;
FIG. 16A depicts a garment with an adaptive actuation system and having a user arranged in a first position;
FIG. 16B depicts the garment of FIG. 16A having the user arranged in a second position;
FIG. 17A depicts an insole with an adaptive actuation system and having a foot of a user arranged in a first position;
FIG. 17B depicts the insole of FIG. 17A having the foot of the user arranged in a second position;
FIG. 18A depicts a bulletproof vest with an adaptive actuation system and having a user arranged in a first position;
FIG. 18B depicts the bulletproof vest of FIG. 18A having the user arranged in a second position; and
FIG. 19 depicts a flow diagram for manipulating a flexible fabric.

### DETAILED DESCRIPTION

The description that follows includes sample systems, methods, and apparatuses that embody various elements of the present disclosure. However, it should be understood that the described disclosure can be practiced in a variety of forms, in addition to those described herein.

The present disclosure describes systems and techniques for the adaptive actuation of a surface, such as a flexible fabric or other material that is configured to engage a user, often for prolonged periods of time. A sample flexible fabric can be a component of a mattress, including a sleeping surface configured to engage a user arranged in a lying position. The mattress can be a smart mattress and can include an actuation assembly that is integrated with the flexible fabric in order to alter one or more characteristics of the sleeping surface, including a firmness of the sleeping surface. Sensors within or associated with the mattress or sleeping system more generally can be configured to detect a condition of the user during use of the sleeping surface. Position and pressure distribution of the user, as two examples, can be detected, and the actuation assembly can be configured to change characteristics of the sleeping surface based on the detection. In some cases, the actuation assembly can be configured to alter the sleeping surface in a manner that causes the user to gently move into a position that encourages restful sleep. Audible and other conditions can also be detected during sleep. The actuation assembly can in turn be configured to gently move or roll a user to mitigate snoring, sleep apnea events during REM-sleep, and so on.

In one example, the actuation assembly can be configured to manipulate the sleeping surface using a flexible bladder that contains a fluid and a pair of electrodes that operate to change the shape of the bladder. The flexible bladder and the pair of electrodes can form components of a Peano-HASEL actuator. The flexible bladder can be formed from an elastic material that defines a volume for a fluid therein. The pair of electrodes can be arranged with a first electrode positioned on a first side of the flexible bladder and a second electrode positioned on a second side of the flexible bladder. In operation, the pair of electrodes can move toward one another in response to an electrical charge. As the pair of electrodes move closer to one another, they can displace the fluid of the flexible bladder without operation of a separate pump, such as the power-intensive air pumps of conventional systems. The fluid displaced by the electrodes can cause the flexible bladder to deform, such as causing a portion of the flexible bladder to assume a larger dimension. As the flexible bladder deforms, the bladder can operate to press into the flexible fabric or other components of the actuation assembly in order to manipulate a sleeping surface associated with the fabric.

Additionally or alternatively, the actuation assembly can implement various shapeable materials to manipulate the sleeping surface. Broadly, as used herein, "shapeable material" can refer to any material that is configured for repeated deformation between a first configuration and a second configuration in response to energy from an energy source. The shapeable material can exhibit a memory effect so as to cycle between the first and second configurations based on one or more inputs from the energy source. Hundreds of thousands or even millions of cycles can be performed, often under heavy mechanical loads. In one example, the shapeable material can include a material responsive to a heat source. A shape memory alloy, including certain copper-aluminum-nickel alloys and nickel-titanium alloys can be used. Composites can also be used, including a blend of high-strength polymer fishing lines and sewing threads. Additionally or alternatively, the shapeable material can include a material that is responsive to a light source. Certain photopolymers or light-activated resins can be implemented that change properties when exposed to light, often in the ultraviolet or visible region.

The shapeable material can receive the heat energy and/or light energy and transition between the first and second configuration. The transitioning of the shapeable material between the first and second configurations can be adapted to manipulate the sleeping surface and mattress more generally. In one example, the shapeable material can be arranged underneath a mattress and serve as a replacement for conventional wooden slats. The shapeable materials can be configured to become stiffer or softer with electrical stimuli, allowing for a responsive mattress without the need for large air cells or pumps. Additionally or alternatively, the shapeable materials can be integrated with the mattress itself in order to provide a more detailed (higher resolution) contouring zone. As one example, the shapeable material can define an arrangement of cilia-like structures that alternate shape based on the presence and receipt of light into the material. Individual ones of the cilia-like structure could in turn manipulate the sleeping surface, allowing for fine-tuned control. Other arrangements of the shapeable material are contemplated and discussed herein.

The actuation assembly can be implemented in a sleeping system. The sleeping system can include a mattress that uses the actuation assembly to modify one or more characteristics of the sleeping surface, including firmness. More broadly, the sleeping system can be configured to provide total sensory immersion and adaptation to user-customizable settings, encouraging a restful sleep. Example systems include a pod structure that defines sleeping volume. The sleeping volume can include the mattress, support elements, and sufficient empty volume for the user to engage the mattress in a lying position and within the pod structure. The pod structure can include various sensors described herein to detect a condition of the user, including sensors that detect an audial input (responsive to snoring), a force or pressure input (responsive to user position and movement), a pulse input (responsive to heart rate), and others. As described herein, the actuation assembly can be responsive to the audial input, the force or pressure input, or the pulse input, such as altering a characteristics of the sleeping surface, including altering the sleeping surface in a way that gently rolls or manipulates the user. The sleeping structure can include further actuators or devices that alter the environment of the user in the sleeping volume, in response to the detected input. As illustrative examples, the sleeping structure can include vibratory devices to oscillate the mattress in a relaxing manner, audial device to introduce pleasing sounds to the sleeping volume, aroma generating devices to introduce pleasing smells into the sleeping volume, light devices to introduce tranquil and appropriately timed lighting, and so on.

The actuation system of the present disclosure can also be implemented in a variety of flexible fabrics. As one example, the flexible fabric can be a component of a surgical table such as a surgical surface that supports a patient during a surgical operation. The actuation system can be configured to alter the flexible fabric in a manner that manipulates the patient during surgery. For example, the flexible fabric can be deformed by the actuation system in a manner that causes patient movement. The deformation can be tuned in a manner that moves the patient into a desired arrangement for surgery. The deformation can be part of preprogrammed sequence for a surgical operation and/or controlled by medial personal during surgery. Easier access and surgical control can therefore be facilitated without necessarily relying on the direct physical contact with the patient by medical personal during the surgery. Other applications of the flexible fabric and actuation system are contemplated and described herein, including application of the flexible fabric as a component of a medical table, a car seat, a garment, an insole, and bullet-proof vest, and so on.

Reference will now be made to the accompanying drawings, which assist in illustrating various features of the present disclosure. The following description is presented for purposes of illustration and description. Furthermore, the description is not intended to limit the inventive aspects to the forms disclosed herein. Consequently, variations and modifications commensurate with the following teachings, and skill and knowledge of the relevant art, are within the scope of the present inventive aspects.

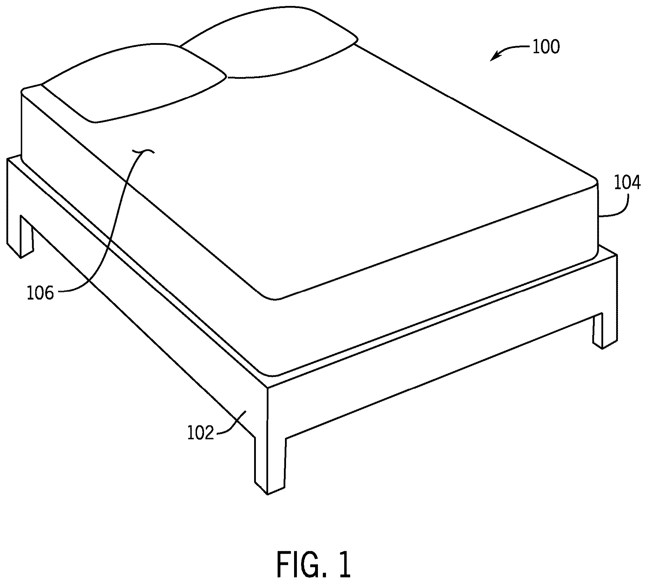

FIG. 1 depicts an example sleeping system 100. The sleeping system 100 is shown as including a frame support 102 and a mattress 104. The mattress 104 can define a sleeping surface 106. The mattress 104 can be a smart mattress, such as those described generally above and as described in greater detail below. In this regard, the mattress 104 can include an actuation assembly that is adapted to alter one or more characteristics of the sleeping surface 106. For example, the actuation assembly can alter a firmness of the sleeping surface 106. The sleeping surface 106 can be formed from or as a flexible fabric or other material is configured to engage a user in a lying position. The sleeping surface 106 can therefore be adapted to deform in response to the configuration of the actuation assembly. In some cases, the actuation assembly can operate to cause to the sleeping surface 106 to deform in a manner that causes the user to gently roll or otherwise gradually reposition the user on the sleeping surface 106 for a restful sleep.

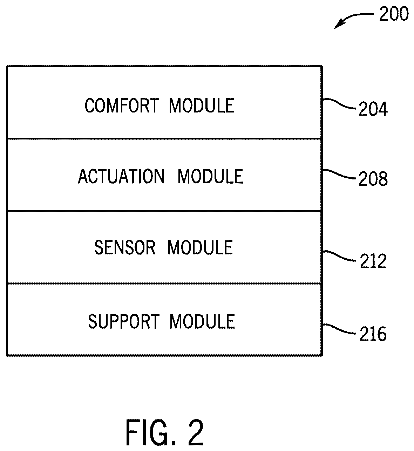

FIG. 2 depicts a functional diagram of an adaptive actuation assembly 200. The adaptive actuation assembly 200 can be implemented in the sleeping system 100 of FIG. 1. The adaptive actuation assembly 200 is shown functionally in FIG. 2 as including a comfort module 204, an actuation module 208, a sensor module 212, and a support module 216. The comfort module 204 can include any appropriate material to facilitate engagement of the adaptive actuation assembly 200 with a user. In the case of the mattress 104, the comfort module 204 can include the sleeping surface 106 and components of the mattress 104 that collectively define the sleeping surface 106 for engaging the user in a lying position. For example, the comfort module 204 can include a cushion, foam, fabric, sheet, or other material that is configured to enhance the comfort of the user on the sleeping surface 106. In one implementation, an ultra-suede topped memory foam cushion can be used. The comfort module 204 can additionally or alternatively include a flexible fabric, such as any of the flexible fabrics described herein. For example, the flexible fabric can be sufficiently flexible to allow for repeated deformation by actuators of the actuation assembly 200. The flexible fabric can also be sufficiently robust to withstand the weight of the user and/or the force from the actuator without undue wear or breaking. The flexible fabric and comfort module 204 more generally can define an interface for the actuators of the actuation assembly 200. In some cases, the actuators can be held at least partially within and/or enmeshed within the flexible fabric itself, allowing the various actuators to be positioned in relatively close proximity to the sleeping surface 106.

With respect to the actuation module 208, the actuation assembly 200 can include various actuator device, assemblies, subassemblies and so on to facilitate the manipulation of the comfort module. As described herein, the actuation module 208 can include a Peano-HASEL type actuator device. For example, the actuation module 208 can include a flexible bladder that contains a fluid. A pair of electrodes can be separated from one another by the flexible bladder. The pair of electrodes can be operable to receive an electrical charge that causes movement of the electrodes toward one another. The movement of the electrodes toward one another can displace the fluid and deform the bladder. The actuator can be engaged with the comfort module 204 in a manner such that deformation of the bladder causes the manipulation of the comfort module. As one example, a portion of the flexible bladder can be enlarged and pressed against a portion of the flexible fabric.

The actuation module 208 can also include various shapeable materials, The shapeable materials, as described above, can include materials that are adapted to change shape in response to the receipt of energy, such as the receipt of energy from heat and/or light source. The shapeable materials can exhibit a memory effect, allowing the shapeable materials to deform and return to an undeformed shape in a consistent manner. Shape memory alloys, nylons, photopolymers can be included in the shapeable materials. The shapeable materials in some cases can be integrated with the comfort module such that the deformation of the shapeable material causes an associated deformation of the flexible fabric or other material. Additionally or alternatively, the shapeable materials can be integrated with the support module 216, described below, to provide structural support and firmness control to the system.

With respect to the sensor module 212, the actuation assembly 200 can implement a variety of sensors that detect a condition of the user. The condition of the user can be used to control one or more of the actuators of the actuation module 208. In one example, the electrodes of the actuator (e.g., Peano-HASEL actuators) can be used to detect a movement and/or pressure distribution of the user. For example, an initial capacitance can be defined between the electrodes. The position of the electrodes relative to one another can shift in response to movement of the user, thereby altering the capacitance between the electrodes. The change in capacitance can be detected and correlated to a force input that cause the electrodes to move. Where the force input exceed as threshold, the actuation assembly 200 can operate one or more of the actuators in order to change a characteristic of the mattress, such as adjusting the firmness. In some cases, the force input can be determined at each of an array of electrodes and analyzed to define a pressure distribution of the user on the mattress 104. The pressure distribution can be analyzed in order to determine the position of the user on the sleeping surface 106, and tracked over time to determine sleeping patterns of the user.

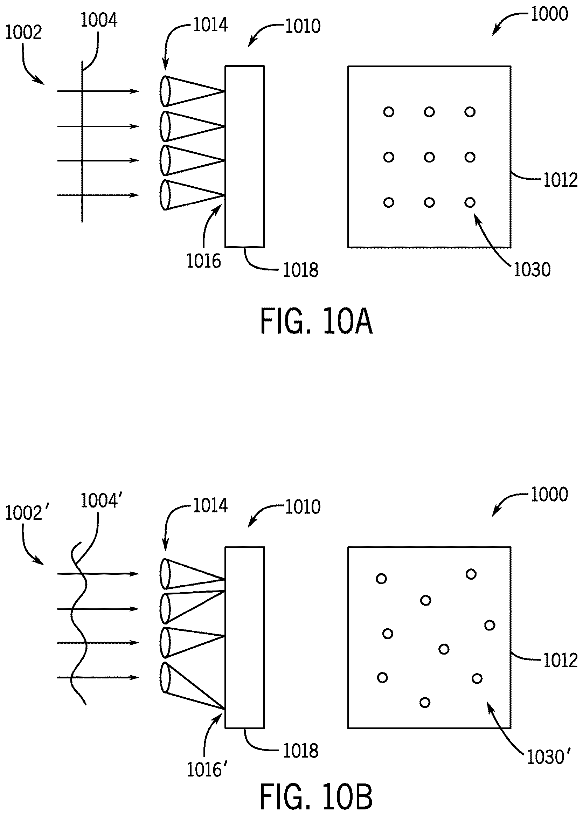

Additionally or alternatively to the electrodes of the actuators, the sensor module 212 can also include other sensors to detect a force input. Resistance-based switches can be used, for example. A wavefront or optical sensor can also be used to detect pressure distribution of the user, as described in greater detail with respect to FIGS. 10A and 10B. Additional sensors can be implemented in order to detect audial inputs, such as snoring. In this regard, the actuation assembly 200 can manipulate the sleeping surface 106 in response to a user snoring. This can include gently rolling the user and potentially mitigating the effects of sleep apnea during REM-sleep. Light and vibration sensors can also be implement and integrated with the various actuators described herein in order to manipulate the sleeping surface 106.

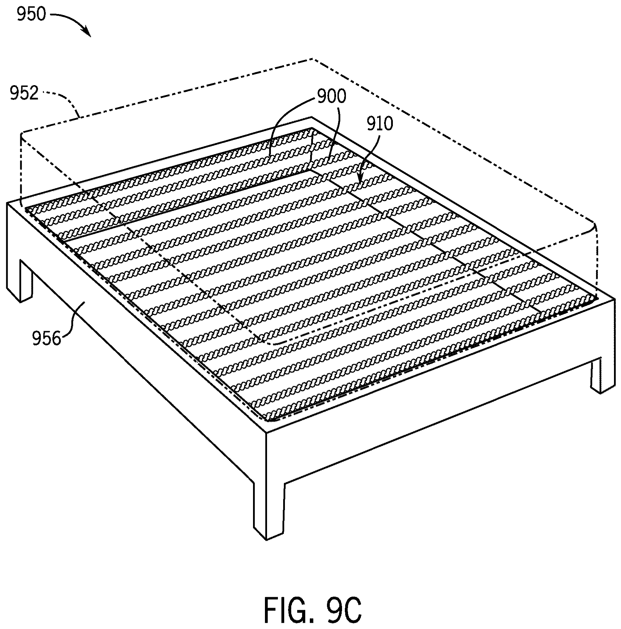

With respect to the support module 216, the actuation assembly 200 can include structural features that operate to support the user in the lying position on the sleeping surface 106. In some cases, the support module 216 can include structural elements, such as a support frame. Additionally or alternatively, the support module 216 can include a waterbed chamber, foams, cushions, and so on that provide additional support and comfort to the user. The various actuators of the present disclosure can, in some cases, form components of the support module 216. As one example, the shapeable materials described herein can used to define a series of support slats underneath the mattress. The shapeable material can thus support the weight of a user engaged on the sleeping surface 106 and be arranged to alter characteristics of mattress, such as deforming in a manner that imparts additional stiffness to the mattress as needed and as shown in greater detail in FIG. 9C.

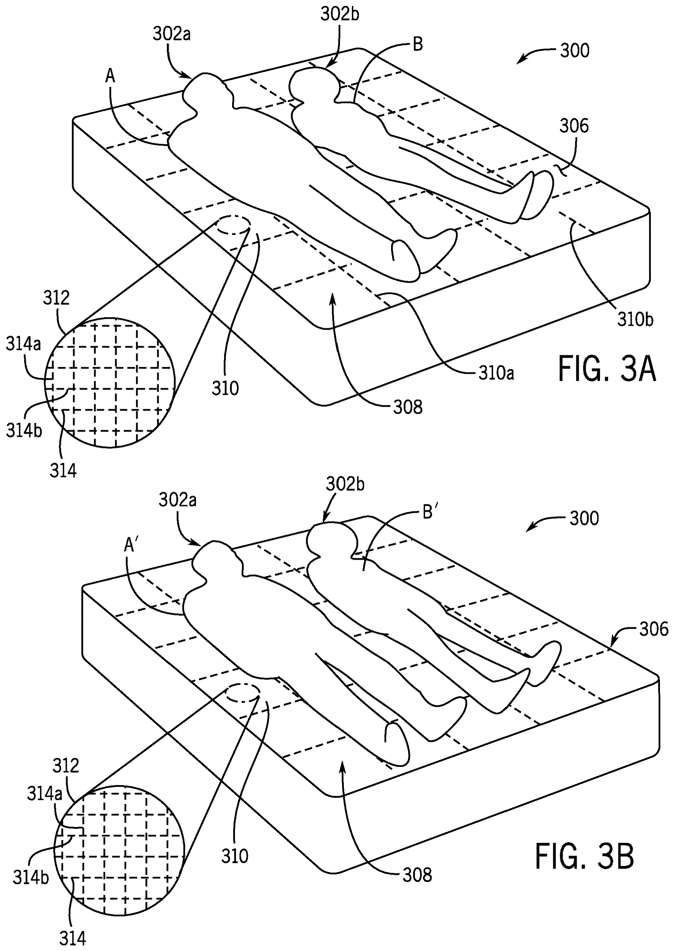

With reference to FIGS. 3A and 3B, a mattress 300 is illustrated that can implement the actuation assembly 200 described above. The mattress 300 can include a sleeping surface 306, including or being defined in part by a flexible fabric. The sleeping surface 306 is shown as having an actuation grid 308 (phantom line). The actuation grid 308 can divide the sleeping surface 306 into representative portions 310. Broadly, the actuation assemblies described herein can be adapted to alter characteristic of the mattress 300 in a manner that is customized for each representative portion 310. For example, the actuation assembly 200 can be integrated below the sleeping surface 306 and be configured to manipulate each representative portion 310. In some cases, the actuation assembly 200 can manipulate each representative portion 310 individually. For example, a first representative portion 310a can be manipulated in a first manner by the actuation assembly 200. A second representative portion 310b can be manipulated in a second, optionally, different manner by the actuation assembly 200. For the sake of illustration, the first manner of manipulation can cause the sleeping surface 306 to have a first stiffness at the first representative portion 310a and a second stiffness at the second representative portion 310b. This can help establish and maintain a comfort level of different users on the same sleeping surface, such as the first user 302a in position A and the second user 302b in position B shown in FIG. 3A.

It will be appreciated, however, that the representative portions 310 are shown for purposes of illustration. The actuation assemblies of the present disclosure can allow for ultra-fine-tuned control of characteristics of the sleeping surface 306. In this regard, FIG. 3A further shows a precision grid 312 (phantom line) having a representative portion 314. A representative portion 314 can represent a subset of the macro representative portion 310. Each representative portion 314 can be configured for manipulation by the actuation assembly 200. In some cases, this can include manipulating a first representative portion 314a in a first manner and a second representative portion 314b in a second, optionally different manner. The micro control at the precision grid 312 can allow for customized manipulations of the sleeping surface 306 to influence movement, position, and condition of the user. As one example, the representative portions 314 can have varying stiffness and/or deformations from a baseline in order to maintain the user in a supportive arrangement on the sleeping surface 306, as one example. Additionally or alternatively, the manipulations of the representative portions 314 can be used to move or reposition the user, such as gently repositioning the user into a position that supports a restful sleep. For example and as shown in FIG. 3B, the first user 302a is arranged in position A' and the second user 302b is arranged in position B' as a result of the manipulation of the sleeping surface 306 by the actuation assembly 200.

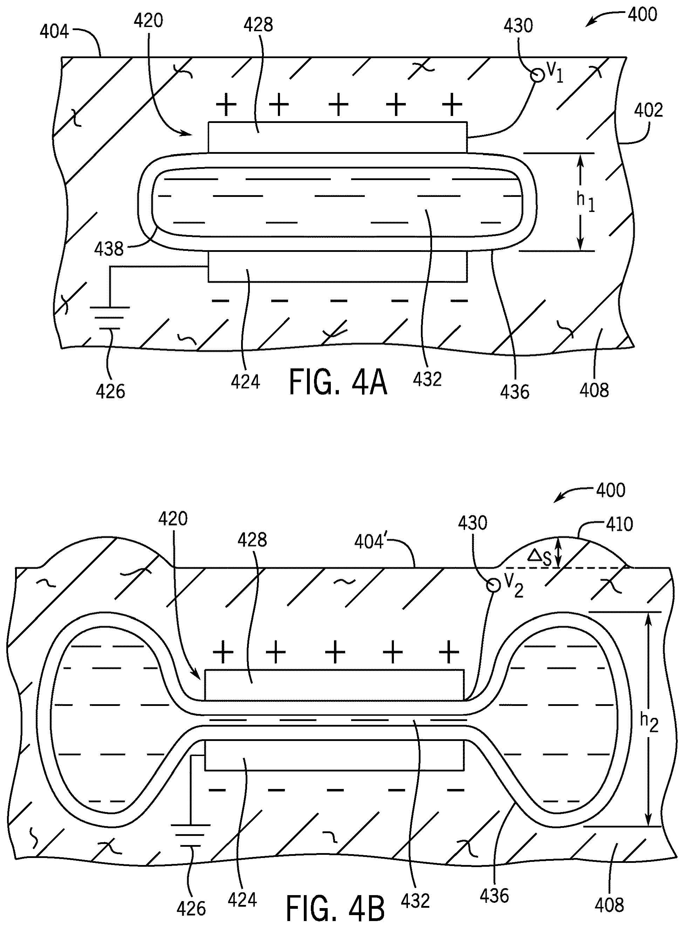

The actuation assemblies described herein can be implemented with a flexible fabric. With respect to FIGS. 4A-4C, a flexible fabric 400 is shown having an actuation assembly 420. The flexible fabric 400 can be substantially analogous to the flexible fabrics described above with respect to the comfort module 204. The flexible fabric 400 can be a component or define a sleeping surface of a mattress. In the example of FIGS. 4A-4C, the flexible fabric 400 includes a flexible outer layer 402, a flexible surface 404, and a fabric region 408. The flexible outer layer 402 can generally be adapted to define an interface with the actuation assembly 420. For example and as shown schematically in FIG. 4A, the actuation assembly 420 can be held within or more generally interface with the fabric region 408. The actuation assembly 420 can operate to manipulate the fabric region 408 and causes a deformation of the flexible surface 404.

In the example of FIGS. 4A-4C, the actuation assembly 420 can include a Peano-HASEL actuator or other actuation device that displaces fluid of a flexible bladder using electrodes. The actuation assembly 420 is shown in FIGS. 4A-4C as including a first electrode 424 and a second electrode 428. The first and second electrodes 424, 428 can collectively define a pair of electrodes. The second electrode 428 can be connected to a current supply 430. The first electrode 424 can be connected to a ground 426. A flexible bladder 436 defining a cavity 438 and containing a fluid 432 can be positioned between the first and second electrodes 424, 428.

In operation, FIG. 4A depicts the actuation assembly 420 in a first or unactuated configuration. In the unactuated configuration, the first and second electrodes 424, 428 can be generally spaced apart from one another. The flexible bladder 436 can be in a relaxed or substantially undeformed shape. In the first configuration, the flexible bladder can have a height h₁. When the flexible bladder has the height h₁, the flexible outer layer 402 can be substantially undeformed, as shown in FIG. 4A.

The actuation assembly 420 can be configured to manipulate the flexible outer layer 402. In operation, the actuation assembly 420 can receive an electrical charge at the first and second electrodes 424, 428. The electrical charge can bias the first and second electrodes 424, 428 to move closer to one another, as shown in FIG. 4B. The first and second electrodes 424, 428 can move toward one another and press towards the flexible bladder 436 that is positioned therebetween. Fluid 432 contained within the flexible bladder 436 is displaced with the flexible bladder 436 with the movement of the electrodes 424, 428, such as being displaced towards ends of the flexible bladder 436 in which no electrodes are present. The displacement of the fluid 432 can cause the flexible bladder 436 to stretch or deform. For example, the fluid 432 can be displaced toward an end portion of the flexible bladder 436 in which no electrodes are present. This can cause the flexible bladder 436 to have a deformed or modified shape. In the example of FIG. 4B, the flexible bladder 436 is deformed such that an end of the flexible bladder 436 has a height h₂. The height h₂ can be greater than the height h₁. The value of the second height h₂ can be based on a value of the electrical charge applied to the first and second electrode 424, 428. In this regard, the value of the second height h₂ can be controlled using the applied electrical charge, thereby allowing for controlled deformation of the actuation assembly 420 to a predetermined and/or customizable value.

The flexible surface 404 can be deformed by the flexible bladder 436 having the second height h₂. For example, the transitioning of the flexible bladder 436 to the second height h₂, can cause a portion of the flexible surface 404 to be deformed, such as being deformed in a manner that defines the modified contour 404' shown in FIG. 4B. The modification can be locally confined to a manipulated portion 410 of the flexible surface 404. The modified contour 404' can have a deformed height Δₛ. The deformed height Δₛ can correspond to a value of the change in height between the second height h₂ and the first height h₁. In this regard, the value of the deformed height Δₛ can be controlled using the applied electric charge, which as described above is used to control the value of the second height h₂. Accordingly, the magnitude of the deformation of the outer surface 404 can be fine-tuned to provide a surface manipulation that is configured to address a specified user condition, such as user repositioning, spinal support, sleep apnea mitigation, and so on.

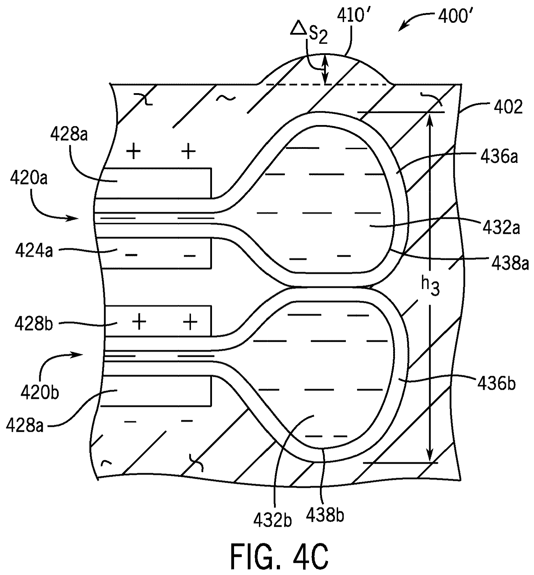

It will be appreciated that the flexible fabric 400 of FIGS. 4A and 4B is shown with a single actuation assembly 420 for purposes of illustration. Multiple actuation assemblies can be implemented with the flexible fabric 400. The multiple actuation assembles can cooperate with one another to produce combinative or additive effects for the manipulation of the flexible fabric 400. For purposes of illustration, FIG. 4C shows a flexible fabric 400'. The flexible fabric 400' has a first actuation assembly 420a and a second actuation assembly 420b. The first and second actuation assemblies 420a, 420b can be substantially analogous to the actuation assembly 420 described above in relation to FIGS. 4A and 4B. In this regard, the first actuation assembly 420a can include a first electrode 424a, a second electrode 428a, a fluid 432a, a flexible bladder 436a, and a cavity 438a. Further, the second actuation assembly 420b can include a first electrode 424b, a second electrode 428b, a fluid 432b, a flexible bladder 436b, and a cavity 438b. The first and second actuation assembly 420a, 420b can be stacked on top of one another and integrated with the fabric region 408 of the flexible outer layer 402.

FIG. 4C shows the first and second actuation assemblies 420a, 420b in a configuration in which an electrical charge is applied to the respective electrodes. In this regard, the first and second electrodes 424a, 428a can move toward one another and displace the fluid 432a and deform a portion of the flexible bladder 436a. Further, the first and second electrodes 424b, 428b can move toward one another and displace the fluid 432b and deform a portion of the flexible bladder 436b. The deformed portions of the flexible bladders 436a, 436b can cooperate with one another to define a deformed height of the collective actuation assemblies h₃. The flexible outer layer 402 can be deformed when the actuation assemblies 420a, 420b exhibit the height h₃. For example, actuation assemblies 420a, 420b having the height h₃ can be configured to cause the flexible outer surface 404 to have a manipulated portion 410' that exhibits a deformed height Δs₂. A value of the deformed height Δs₂ can correspond to a value of the deformed height h₃ of the flexible bladders 436a, 436b. In some cases, the presence of multiple flexible bladders can produce an additive or a multiplicative effect on the value of the deformed height Δs₂. For example, the flexible bladder 436a can encounter resistance from the flexible bladder 436b upon the displacement of fluid by the electrodes. As such, the flexible bladder 436a can be biased toward deforming to a greater extent in a direction extending toward the flexible outer surface 404, which can present less resistance to the bladder's expansion, thereby allowing for the enhanced deformation at the flexible outer surface 404 than may otherwise be possible with a single bladder.

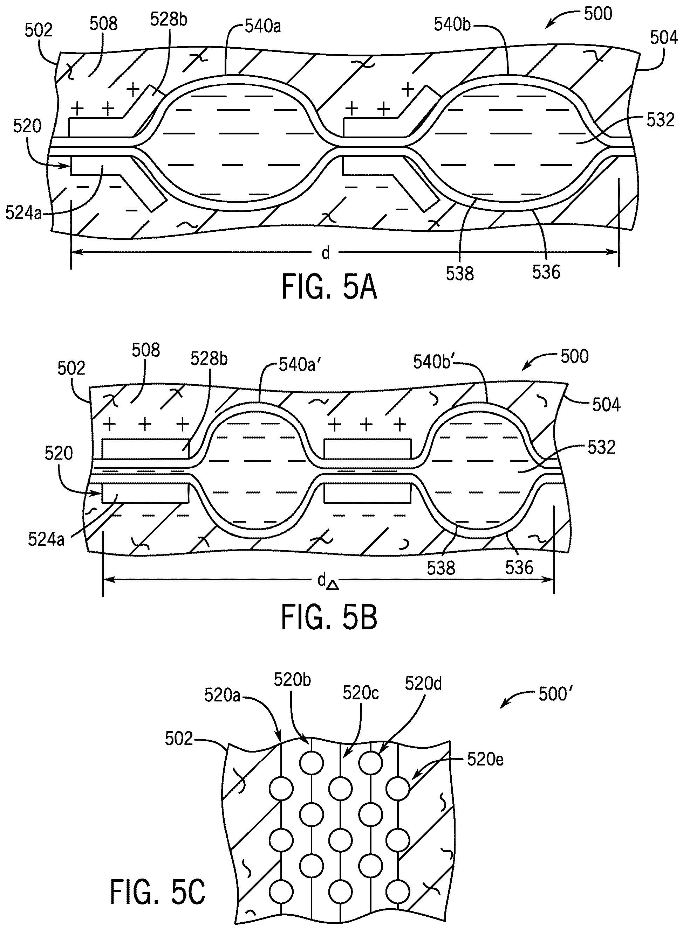

With respect to FIGS. 5A and 5B, a flexible fabric 500 is shown with an actuation assembly 520. The flexible fabric 500 can include a flexible outer layer 502, a first end 504, and a fabric region 508. The actuation assembly 520 can be substantially analogous to the actuation assembly 420 and include a flexible bladder 536 that contains a fluid 532 in a cavity 538. The fluid 532 can be displaced by the operation of the actuation assembly 520 in order to manipulate the flexible outer layer 502.

Notwithstanding the foregoing similarities, the actuation assembly 520 includes a first pair of electrodes and a second pair of electrodes. For example, the actuation assembly 520 includes electrodes 524a, 528a that define the first pair of electrodes and electrodes 524a, 528b that define the second pair of electrodes. The flexible bladder 536 can define the cavity 538 as a continuous cavity that extends between the electrodes 524a, 528a of the first pair and the electrodes 524b, 528b of the second pair of electrodes. As shown in FIG. 5A, interposed with the first and second pairs of electrodes, the flexible bladder 536 can define a first bulbous portion 540a and a second bulbous portion 540b. The continuous cavity 538 can have a length d in the unactuated configuration shown in FIG. 5A.

In operation, the actuation assembly 520 can be adapted to receive an electrical charge that causes the electrodes 524a, 528a of the first pair of electrodes to move closer to one another. The actuation assembly 520 can be further adapted to receive an electrical charge that causes the electrodes 524b, 525b of the second pair of electrodes to move closer to one another. As shown in FIG. 5B, the movement of the respective electrodes of the first and second pairs of electrodes can cause the fluid 532 to be displaced in order to deform the flexible fabric 500. In some cases, as shown in FIG. 5C, the deformation of the flexible bladder 536 can cause the length of the continuous cavity 538 to contract, such as contracting to a length d_{Δ}. The actuation assembly 520 can be integrated with the fabric region 508 in a manner such that the flexible outer layer 502 is manipulated or deformed when the flexible bladder has the length d_{Δ}. For example, the contraction of the flexible bladder to the length d_{Δ} can cause the first end of the first end 504 to be pulled or retracted by a corresponding amount. The amount of retraction of the first end 504 can be tuned according to the electrical charge applied to the electrodes, as described above with respect to FIGS. 4A-4C.

In some cases, the flexible fabric 500 can include multiple actuation assemblies arranged in parallel. For example, the FIG. 5C depicts a flexible fabric 500' having a first actuation assembly 520a, a second actuation assembly 520b, a third actuation assembly 520c, a fourth actuation assembly 520d, and a fifth actuation assembly 520e. Each of the actuation assemblies 520a-520e can be analogous to the actuation assembly 520 described above with respect to FIGS. 5A and 5B. In this regard, each of the actuation assemblies 520a-520e can have a flexible bladder that defines a continuous cavity that extends between multiple electrodes. The flexible bladders of each of the actuation assemblies 520a-520e can therefore be configured to contract along a lengthwise dimension in response to an electrical charge. The arrangement of multiple actuation assemblies in series can contribute to additive or multiplicative effects with respect to a value of deformation of the flexible outer layer 502. For example, the presence of multiple actuation assemblies can cause a localized portion of the flexible outer layer to be deformed with a great amount of force, the application of which is more finely controlled, including individually at each actuation assembly 520a-520e. This can be beneficial for a range of application, such as using the flexible fabric 500' to reposition a sleeping user a gentle manner.

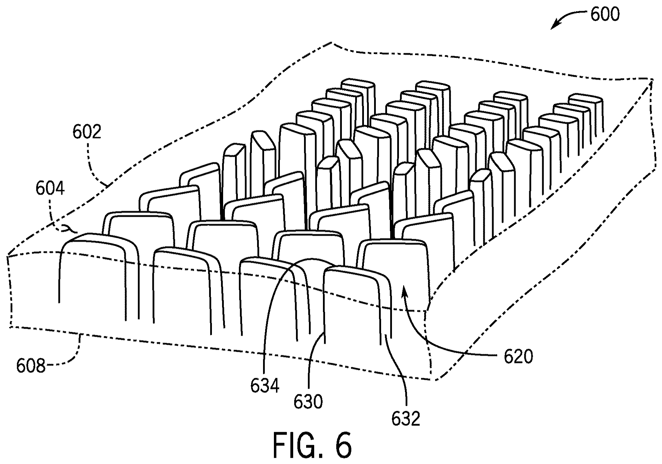

The actuation assemblies of the present disclosure can also include shapeable materials, as described herein. For example and with reference to FIGS. 6-9C, various actuation assemblies are shown in which a shapeable material is used to manipulate a portion of a flexible fabric. The shapeable material can be configured for repeated cycling between a first shape and a second shape. The shapeable material can be configured to transition between the first shape and the second shape upon the receipt of energy from an energy source, including receiving heat and/or light energy. The shapeable material can have a memory effects so as to return to first shape upon the cessation of the energy.

Turning to FIG. 6, an example flexible fabric 600 is shown having an actuation assembly 620. The actuation assembly 620 includes a collection of shapeable materials and components configured to manipulate the flexible fabric 600. The flexible fabric 600 is shown in FIG. 6 as including a fabric outer layer 602, a flexible surface 604 and a fabric region 608. The actuation assembly 620 can be held at least partially within or otherwise interface with the fabric region 608. The actuation assembly 620 is operable to cause a deformation of the flexible outer surface 604 upon actuation.

To facilitate the foregoing, the actuation assembly 620 can include an array of shapeable components, including the shapeable component 630. The shapeable component 630 can have a first end 632 that can be fixed or otherwise attached to a base. The shapeable component 630 can have a second end 634 that is a free end opposite the first end 632. The shapeable component 630 can be formed at least partially from a shapeable material, such as any of the shapeable materials described herein. In this regard, the shapeable component 630 can be configured to transition between a first configuration and a second configuration upon the receipt of energy. In the example of FIG. 6, the transition of the shapeable component 630 can cause the second end 634 to move relative to the fabric region 608. The movement of the second end 634 relative to the fabric region 608 can be configured to cause a deformation of the flexible surface 604.

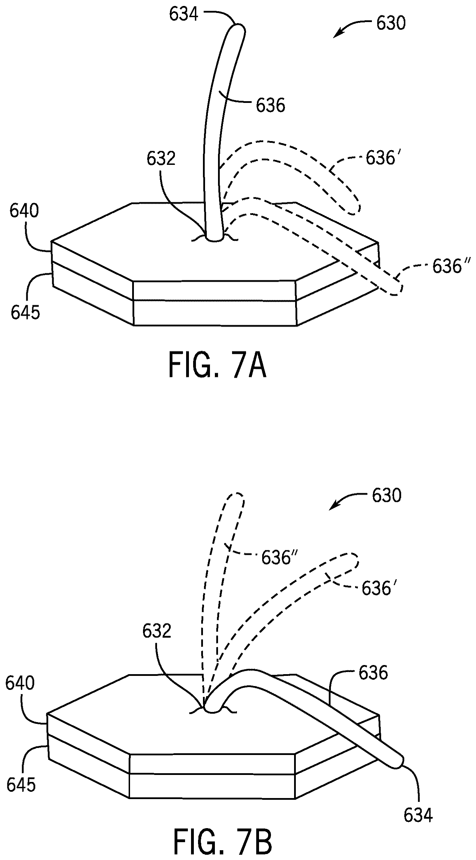

With reference to FIGS. 7A and 7B, the shapeable component 630 is shown associated with a base 640 and an energy source 645. The shapeable component 630 can be connected to the base 640 at the first end 632. The energy source 645 can be coupled with the base 640 and/or the shapeable component 630 and be operable to deliver energy to the shapeable component 630. For example, the shapeable component 630 can be or include a photopolymer or light-activated resin that changes properties when exposed to light. The energy source 645 can include a light source that is configured to deliver light to the shapeable component 630 and cause the shapeable component 630 to change shape.

In the configuration of FIG. 7A, the shapeable component 630 is shown as having a first body arrangement 636. For example, in the first body arrangement 636, the shapeable component 630 can substantially extend and protrude from the base 640. The first body arrangement 636 can correspond to a state of the actuation assembly 620 in which the shapeable component 630 receives light energy from the energy source 645. FIG. 7A also shows a second body arrangement 636' and a third body arrangement 636". The second body arrangement 636' and the third body arrangement 636" can correspond to a configuration of the shapeable component 630 in which the shapeable component receives less or no light from the energy source 645. In this regard, the shapeable component 630 can be configured to transition between a range of configurations and positions between the first body arrangement 636 and the third body arrangement 636" based on a quantity of light received from the light source 645. For example and as shown in FIG. 7B, the shapeable component 630 can exhibit the third body arrangement 636" when the energy source 645 emits substantially no light toward the shapeable component 630.

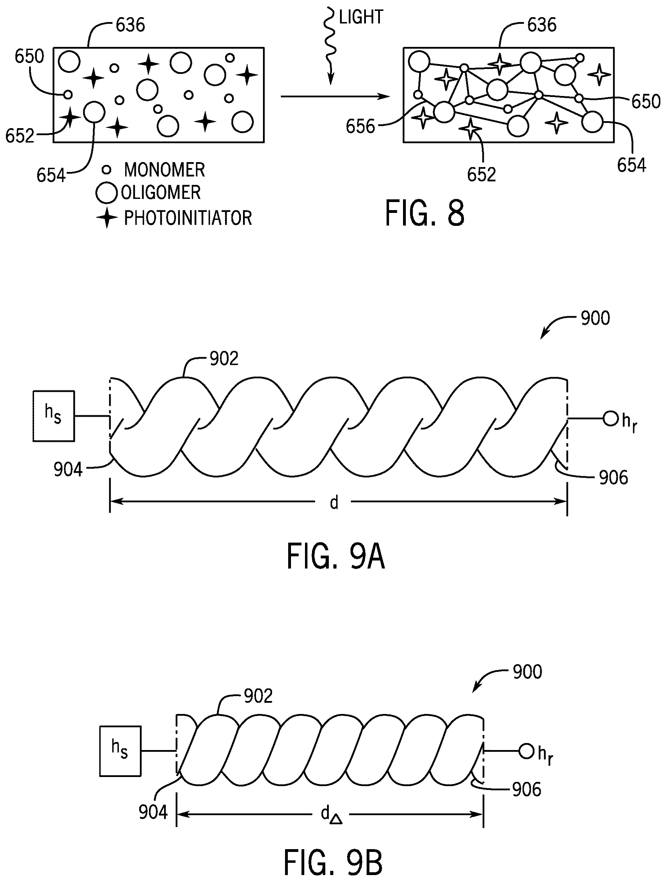

In one example, the shapeable component 630 can be formed at least partially from a photopolymer or light activated resin. In this regard, FIG. 8 shows a schematic diagram of the photopolymer or light activated resin that permits the shapeable component 630 to transition shapes. As shown in FIG. 8, in third body arrangement 636" the shapeable component 630 generally includes a monomer 650, an oligomer 652, and a photoinitiator 654. The monomer 650, the oligomer 652, and the photoinitiator 654 can be associated with one another to define the third body arrangement 636", as shown in FIG. 7B. The shapeable component 630 can be exposed to light in order to transition the shapeable component 630 to the first body arrangement 636. As shown in FIG. 8, upon the receipt of light, links 656 can be formed between at least some of the monomer 650, the oligomer 652, and the photoinitiator 654. In some cases, the formation of the links 656 can cause one or more material properties of the shapeable component 630 to be altered, including causing a portion of the shapeable component 630 to contract or otherwise change in length such that the shapeable component 630 is operable to transition between a first configuration and a second configuration. In some cases, upon the cessation of the light, the links 656 can dissipate and allow the shapeable component 630 to transition from the first body arrangement 636 to the third body arrangement 636". Further, the links 656 can be configured to dissipate in a manner that allows the shapeable component 630 to exhibit the memory effect and produce the shapeable component 630 in substantially the same shape initial shape.

In other examples, the various actuation assemblies of the present disclosure can include a shapeable material that is manipulateable upon the receipt of heat energy. For example, Joule heating can be used to heat a material, including nylon or certain alloys, to change a shape of the shapeable material. With reference to FIG. 9A and 9B, a sample shapeable material 900 is shown that can be configured to alternate between a first shape and a second shape upon the receipt of heat. The shapeable material 900 can define a coiled structure 902 having a first end 904 and a second end 906. The first end 904 can be associated with a heat source hₛ. The second end 906 can be associated with a heat output hᵣ. The heat source hₛ can be an electrical current source. The heat output hᵣ can be an output of the electrical current subsequent to the current passing through the coiled structure 902. The coiled structure 902 can have a length d in a first configuration, such as that shown in FIG. 9A. The first configuration can correspond to a substantially cool configuration in which a reduced amount of heat energy, including no heat energy, is introduced to the shapeable material 900.

In a second configuration, heat energy can be introduced to the shapeable material 900 in order to manipulate the coiled structure 902. For example and as shown in FIG. 9B, heat energy can be introduced to the coiled structure 902 via the heat source hₛ. The introduction of heat to the coiled structure 902 can cause the coiled structure to exhibit a reduced length d_{Δ}. The reduced length d_{Δ} can be at least 90% of the length d, at least 70% of the length d, at least 50% of the length d. The value of the reduced length d_{Δ} can be partially based on the amount of heat energy added to the coiled structure. For example, in a first instance, a first quantity of heat can be introduced to the coiled structure 902 by the heat source hₛ in order to reduce the length of the coiled structure 902 by a first amount. In a second instance, a second, greater quantity of heat can be introduced to the coiled structure 902 by the heat source hₛ in order to reduce the length of the coiled structure 902 by a second, greater amount.

The shapeable material 900 can be used to manipulate a flexible fabric, such as that of a mattress. In one example shown in FIG. 9C, the shapeable material 900 can be incorporated into a sleeping system 950 in order to support a mattress 952 (shown in phantom). For example, the shapeable material 900 can form a series of slats 910 in a base frame 956. The series of slats 910 can be configured to function as several responsive hammocks underneath the mattress 952. For example, each shapeable material 900 can be adapted to receive electrical stimuli to change an effective length of the coiled structure 902, as described above. The change in the effective length can make sections of the slats 910 stiffer or softer. The changing stiffness of the slats could in turn alter a stiffness of the mattress 952, or otherwise counter the mattress 952 to the individual needs of the user.

In some examples, a wavefront sensor can be used to detect a position, orientation, and/or movement of a user relative to a flexible fabric. For example, a wavefront sensor can be configured to detect a perturbed wavefront. The perturbed wavefront can be associated with a movement of a user. One or more processing units can measure a value of the perturbed wavefront and associate the perturbed wavefront with the user's movements.

FIGS. 10A and 10B depict an example sensing system 1000 that measures a perturbed wavefront. The sensing system 1000 can include a wave-front sensor 1010, a lens array 1014, a sensing structure 1018, and a focal point landing surface 1012. The system 1000 can operate by receiving incoming light 1002 at the lens array 1014. The incoming light 1002 can collectively define a wave front 1004. The lens array 1014 can concentrate and direct the light toward focal points 1016 on the sensing structure 1018. The focal points 1016 can establish a focal point arrangement 1030 along the focal point landing surface 1012. In the example of FIG. 10A, the wave front 1004 can be substantially unperturbed. In this regard, the focal point arrangement 1030 is shown in FIG. 10A as forming a grid configuration of substantially even spacing.

With respect to FIG. 10B, the wave-front sensor 1010 can receive incoming light 1002'. The incoming light 1002' can define a perturbed wavefront 1004'. For example, the incoming light 1002' can be received by the lens array 1014 at different incident angles than the incoming light 1002 of FIG. 10A. In this regard, the lens array 1014 can operate to direct the incoming light toward focal points 1016' on the sensing structure 1018. The focal points 1016' can establish a focal point arrangement 1030' along the focal point landing surface 1012. In the example of FIG. 10B, the wave front 1004' can be substantially perturbed. Accordingly, the focal point arrangement 1030' is shown in FIG. 10B as forming a configuration of substantially uneven spacing. The wavefront sensor 1010 can be operative to measure a deviation of the focal point arrangement 1030' from the focal point arrangement 1030 in order to determine a magnitude of the perturbed wavefront relative to a baseline. The magnitude of the perturbed wavefront can in turn be correlated to a movement of the user relative to the flexible fabric.

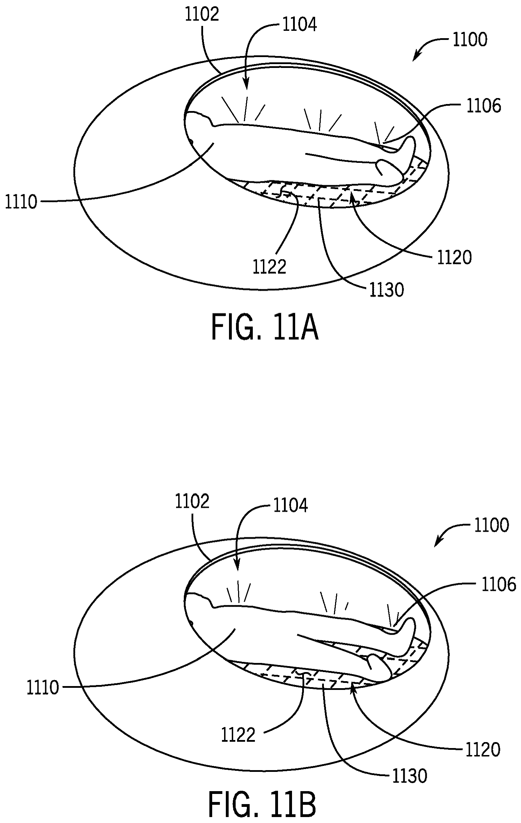

FIGS. 11A-18B depicts example implementation of the flexible fabrics and actuation assemblies described herein. Broadly, the actuation assemblies of the present disclosure can be used to manipulate substantially any flexible fabric that is configured to engage a user. For example, a flexible fabric can be configured to engage a user for a prolonged period of time (e.g., sleeping), to support a user in a predetermined position (e.g., sitting, or standing), to remain with a user during movement (e.g., clothing) and so on. The actuation assemblies described herein can be configured to manipulate the flexible fabric in a manner that causes the flexible fabric to deliver a force input to the user. For example, the manipulation of the flexible fabric can deform an outer surface of the flexible fabric and the user can receive a force input corresponding to the deformation of the flexible fabric. In some cases, the deformation can be sufficient to reposition the user in order to adapt the user to dynamic and measurable conditions.

With reference to the embodiment of FIGS. 11A-11C, a sleeping system 1100 is shown. The sleeping system 1100 can implement an adaptive actuation system, such as that described above, to control one or more characteristics of a mattress based on a user condition. The sleeping system 1100 can be adapted to contribute to an immersive sleeping experience. For example, the sleeping system 1000 can include a pod 1102 that defines a sleeping volume 1104. The sleeping volume 1104 can have ambient effects 1106, such as lights, smells, sounds, and the like. The sleeping volume 1104 can be configured to hold a mattress 1120 and a user 1110 therein. The pod 1102 can be substantially spherical in shape and form a partial enclosure over the user 1110. The mattress 1120 can include a sleeping surface 1122 that is configured to engage the user in the lying position within the sleeping volume 1104. The mattress 1120 can include an adaptive actuation system 1130, such as any of the adaptive actuation systems described herein. The adaptive actuation system 1130 is shown in the example of FIG. 11A with a representative grid (shown in phantom). The adaptive actuation system 1130 can be configured to modify the sleeping surface 1122, as described herein. For example, in the first configuration shown in FIG. 11A, the adaptive actuation system 1130 can operate to maintain the user 1110 in a first position. The adaptive actuation system can further operate to manipulate the sleeping surface 1122 and move the user 1110 to a second position, as shown in FIG. 11B.

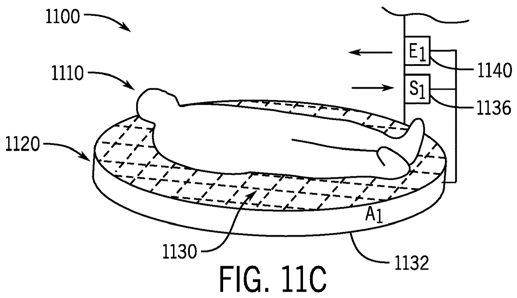

The sleeping system 1100 can be configured to detect a condition of the user 1110 and alter one or more characteristics of a sleeping experience. In the schematic diagram of FIG. 11C, the user 1110 is shown engaged with the sleeping surface 1122 in a lying position. In the schematic illustration, the actuation module 1132 is shown below the sleeping surface 1122. The actuation module 1132 can be substantially analogous to the actuation module 208 of FIG. 2, redundant explanation of which is omitted herein for clarity. The actuation module 1132 can be associated with a sensing module 1136 and an ambient emission module 1140, as shown in FIG. 11C. The sensing module 1136 can be configured to detect one or more condition of a user. For example, the sensing module 1136 can be configured to detect an audible condition of the user 1110, such as snoring or a voice command. Additionally or alternatively, the sensing module 1136 can be configured to detect a force and/or motion input from the user, which can be indicative of a change in position of the user 1110 on the sleeping surface 1122.

The actuation module 1132 can be configured to receive a signal from the sensing module 1136 and alter one or more characteristics of the sleeping surface 1122. For example, the actuation module 1132 can be adapted to change a firmness of the sleeping surface 1122 as a result of a user command. In other cases, the actuation module 1132 can be configured to change or reposition the user 1110, such as repositioning the user 1110 as in order to provide the user with more support or firmness and/or reposition the user to mitigate sleeping apnea events, among other possibilities. Additionally or alternatively, the ambient emission module 1140 can be configured to receive a signal from the sensing module 1136 and alter one or more characteristics of the sleeping volume. For example, the ambient emission module 1140 can be configured to introduce certain smells into the sleeping volume 1104 based on a detected condition of a user. Further, the ambient emission module 1140 can be configured to introduce light, vibratory, heat, and other ambient effects into the sleeping volume 1104. In some cases, the actuation module 1132 and the ambient emission module 1140 can cooperate to produce combinative effects that can mitigate a detected condition. As one example, the sensing module 1136 can detect excessive movement of the user 1110 that is associated with restlessness. In turn, the actuation module 1130 can adjust a firmness of the sleeping surface 1102 in connection with the ambient emission module 1140 introducing pleasing smells and calming sounds that can facilitate a restful sleep.

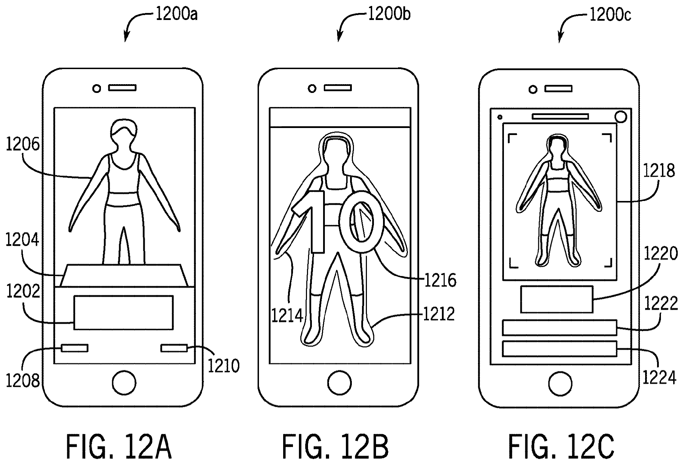

The sleeping system 1100 can be operated in part by mapping a body contour of the user 1110. The actuation system 1130 can in be configured to modify the sleeping surface 1122 based on the contour of the body in order to deliver a customized sleeping experience. In some cases, the body mapping can be facilitated using a smartphone or other electronic device. For example and with references to FIG. 12A-12C, an electronic device is used to capture an image of the user 1110 in order to calibrate the sensors of the actuation system 1130. For example and with reference to FIG. 12A, a first user interface 1200a is shown. The first interface 1200a can include information associated with initiating a calibration process. The first interface 1200a can include a prompt 1202 that includes a message indicating the proper placement of the electronic device or camera in order to capture an image of the user for calibration. The first interface 1200a can further include a table 1204 and an avatar 1206. The table 1204 can represent a reference object of the frame of the captured image. The avatar 1206 can convey information to the user regarding the appropriate position relative to the reference object for capturing the image. An exit button 1208 can be provided to stop the calibration sequence. A commence button 1210 can also be provided to begin a calibration process.

With reference to FIG. 12B, a second user interface 1200b in which a calibration process is initiated. For example, the second interface 1200b presents a user image 1212 and an overlay 1214. The overlay 1214 can represent a targeted and/or an approximated body contour of the user, as presently captured in the user image 1212. A countdown 1216 is also provided which indicates the status of the calibration process. With reference to FIG. 12C, a third user interface 1200c is shown in which the calibration process is finalized. For example, the third interface 1200c presents a resulting match 1218 of the user image and the overlay 1214. A prompt 1220 can be provided, including information that request user review of the resulting match 1218. At the third interface 1200c, a user can review the fit of the overlay 1214 with the image 1212. If the resulting match 1218 is unacceptable, the user can select a retake button 1222 in order to revert to the second interface 1200b. In the event that the resulting match 1218 is acceptable, an acceptance button 1224 can be selected in order to complete the calibration process.

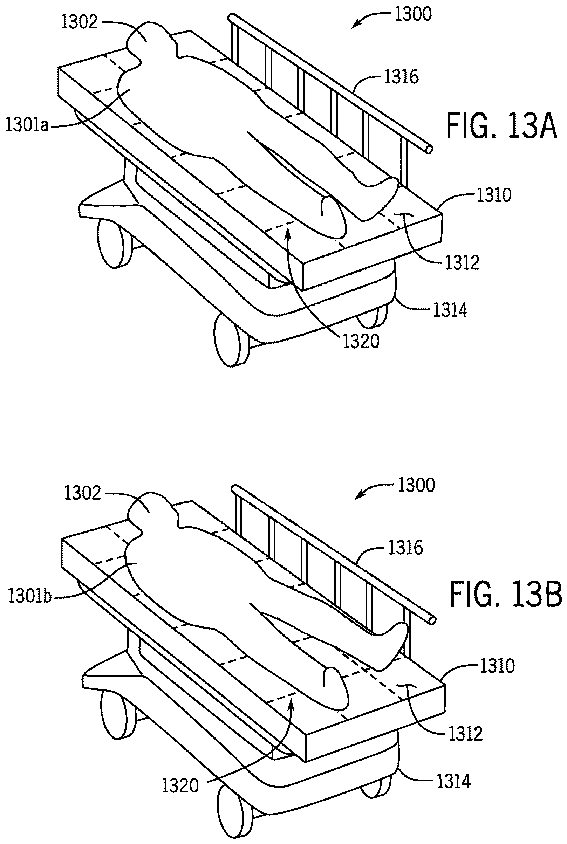

In another example, the actuation assemblies of the present disclosure can be implemented in a flexible fabric that forms a portion of a medical table. For example and as shown in FIG. 13A, a medical table 1300 is shown as having a flexible fabric 1310. The flexible fabric 1310 can define a medical surface 1312 that is configured to engage a user 1302 in a convalescing position. The medical table 1300 can be a hospital bed or other device that is used to the treatment and care of patients. In the example of FIG. 13A, the hospital bed 1300 is shown as including a wheel assembly 1314 and a rail 1316. In other examples, the hospital bed 1300 can include other components that facilitate the treatment of the user 1302.

The flexible fabric 1310 can be associated an actuation assembly 1320. The actuation assembly 1320 can be substantially analogous to the actuation assemblies and modules described herein, such as the actuation module 208 of FIG. 2; redundant explanation of which is omitted here for clarity. The actuation assembly 1320 can be configured to manipulate the flexible fabric 1310. For example, the actuation assembly 1320 can be configured to change a characteristics of the medical surface 1312, such as firmness, or other characteristic in order to support the healing of the user 1302. In some cases, the manipulation of the flexible fabric 1310 can occur in response to a detection of a condition of the user 1302. The condition can include the position and/or movement of the user 1302. Additionally or alternatively, the condition can be associated with a medical diagnoses, and the actuation assembly 1320 can be configured to manipulate the user 1302 in order to facilitate a course of treatment. In some cases, the actuation assembly 1320 can be configured to manipulate the medical surface 1312 in a manner that causes movement of the user 1302. For example in FIG. 13A, the user 1302 is shown in a first position 1301a. The actuation assembly 1320 can operate to move the user 1302 into a second position 1301b, as shown in FIG. 13B. The movement of the user 1302 can occur substantially automatically and without direct input from medical personnel. This can be beneficial in order to support patient movement during treatment, in order to prompt circulation and decrease the prevalence of bed sores and the like.

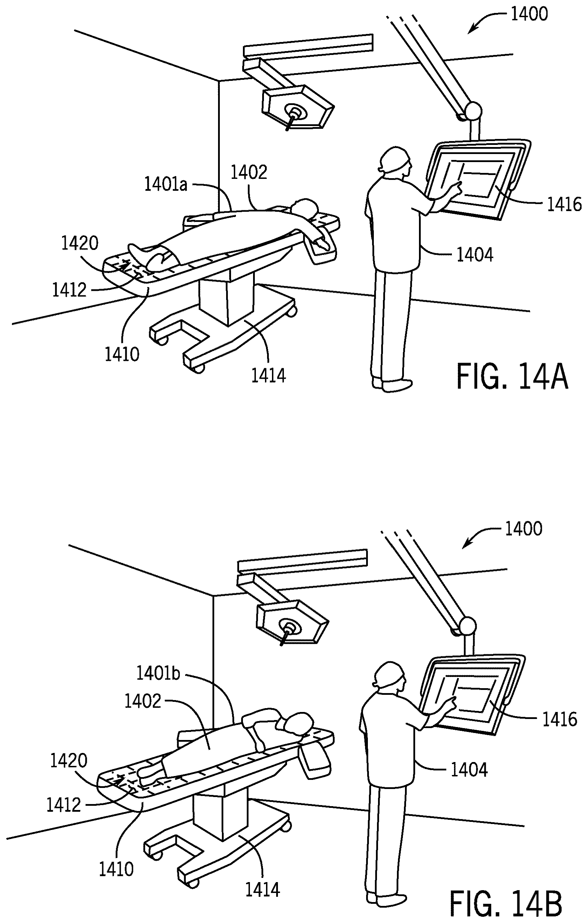

In another example, the actuation assemblies of the present disclosure can be implemented in a flexible fabric that forms a portion of a surgical table. For example and as shown in FIG. 14A, a surgical table 1400 is shown as having a flexible fabric 1410. The flexible fabric 1410 can define a surgical surface 1412 that is configured to engage a user 1402 in a surgical position. The surgical table 1400 can be associated with an operating room and/or other systems and components that facilitate the operation of surgical procedures. In the example of FIG. 14A, the surgical table 1400 is shown as including a wheel assembly 1414. In other examples, the surgical table 1400 can include other components that facilitate the surgical treatment of the user 1402. The surgical table 1400 is also show associated with a control station 1416. The control station can be operatively associated with the actuation assembly 1420. A medical operator 1404 can use the control station 1416 to control the operation of the actuation assembly 1420.

The flexible fabric 1410 can be associated an actuation assembly 1420. The actuation assembly 1420 can be substantially analogous to the actuation assemblies and modules described herein, such as the actuation module 208 of FIG. 2; redundant explanation of which is omitted here for clarity. The actuation assembly 1420 can be configured to manipulate the flexible fabric 1410. For example, the actuation assembly 1420 can be configured to change a characteristic of the surgical surface 1412, such as firmness, or other characteristic in order to support the healing of the user 1402. In some cases, the manipulation of the flexible fabric 1410 can occur in response to a detection of a condition of the user 1402. The condition can include the position and/or movement of the user 1402. Additionally or alternatively, the condition can be associated with a medical diagnoses, and the actuation assembly 1420 can be configured to manipulate the user 1402 in order to facilitate a surgical operation. In some cases, the actuation assembly 1420 can be configured to manipulate the surgical surface 1312 in a manner that causes movement of the user 1402. For example in FIG. 14A, the user 1402 is shown in a first position 1401a. The actuation assembly 1420 can operate to move the user 1402 into a second position 1401b, as shown in FIG. 14B. The movement of the user 1402 can occur substantially automatically and without direct input from the medical personnel 1404. In other cases, the medical personnel 1404 can user the control station 1416 to adapt the operation of the actuation assembly 1420 to the user 1402 and real-time condition of the surgery. This can be beneficial in order to move and position the user 1402 in an appropriate manner during surgery.

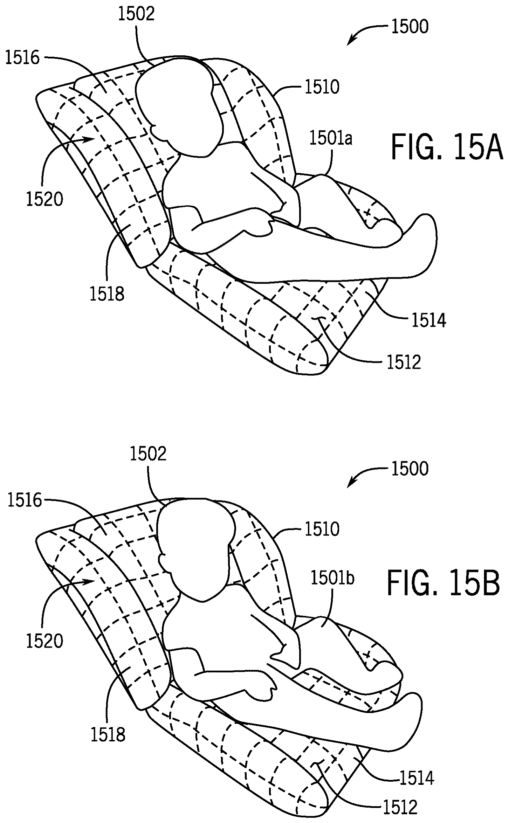

In another example, the actuation assemblies of the present disclosure can be implemented in a flexible fabric that forms a portion of a car seat. For example and as shown in FIG. 15A, a car seat 1500 is shown as having a flexible fabric 1510. The flexible fabric 1510 can define a sitting surface 1512 that is configured to engage a user 1502 in a sitting position. The car seat 1500 can be a device that is used to safely transport children in a motor vehicle. In the example of FIG. 15A, the hospital bed 1300 is shown as including a seat portion 1514, a back support portion 1516, and a side bumper portion 1518. The flexible fabric 1510 can extend over one or more or all of the seat portion 1514, the back support portion 1516, and the side bumper portion. In other examples, the car seat 1500 can include other components that facilitate the transportation of the user 1502.

The flexible fabric 1510 can be associated an actuation assembly 1520. The actuation assembly 1520 can be substantially analogous to the actuation assemblies and modules described herein, such as the actuation module 208 of FIG. 2; redundant explanation of which is omitted here for clarity. The actuation assembly 1520 can be configured to manipulate the flexible fabric 1510. For example, the actuation assembly 1520 can be configured to change a characteristics of the sitting surface 1512, such as firmness, or other characteristic in order to support the sitting of the user 1502. In some cases, the manipulation of the flexible fabric 1510 can occur in response to a detection of a condition of the user 1502. The condition can include the position and/or movement of the user 1502. In some cases, the actuation assembly 1520 can be configured to manipulate the sitting surface 1512 in a manner that causes movement of the user 1502. For example in FIG. 15A, the user 1502 is shown in a first position 1501a. The actuation assembly 1520 can operate to move the user 1502 into a second position 1501b, as shown in FIG. 15B. The movement of the user 1502 can occur substantially automatically and without direct input from other associated user, such as a parent of the child. This can be beneficial in order to support patient movement during prolonged periods of sitting, in order to prompt circulation and enhance the usability of the car seat 1500 for prolonged durations.

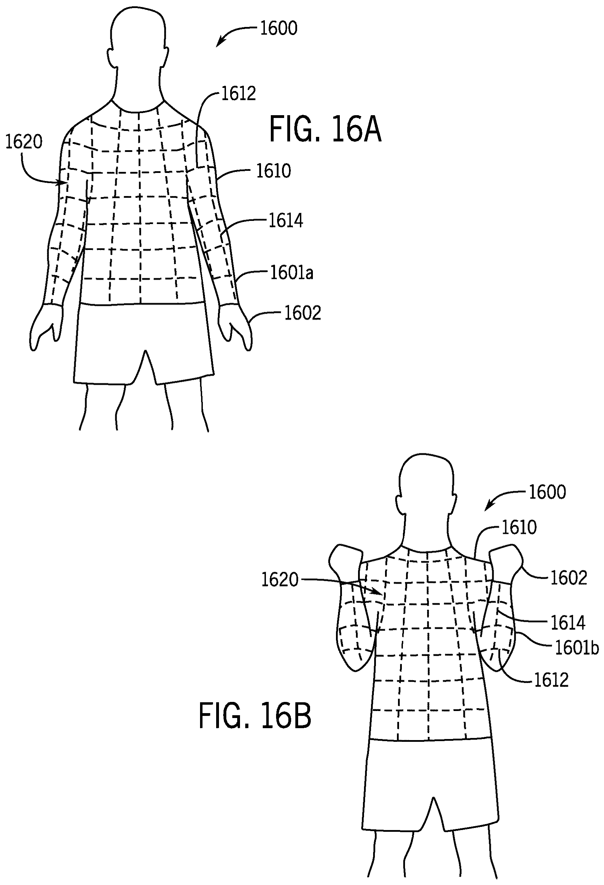

In another example, the actuation assemblies of the present disclosure can be implemented in a flexible fabric that forms a portion of a garment. For example and as shown in FIG. 16A, a garment 1600 is shown as having a flexible fabric 1610. The flexible fabric 1610 can define an interface 1610 that is configured to engage a user 1602 such that the garment 1600 can be worn by the user 1602. The garment 1600 can be a shirt or upper body covering that is used to facilitate exercise by selectively increasing the resistance of the flexible fabric 1610. In the example of FIG. 16A, the garment 1600 is shown as including bicep portion 1612 and a forearm portion 1614. In other examples, the garment 1600 can include other components that facilitate the exercise of the user 1602.

The flexible fabric 1610 can be associated an actuation assembly 1620. The actuation assembly 1620 can be substantially analogous to the actuation assemblies and modules described herein, such as the actuation module 208 of FIG. 2; redundant explanation of which is omitted here for clarity. The actuation assembly 1620 can be configured to manipulate the flexible fabric 1610. For example, the actuation assembly 1620 can be configured to change a characteristics of one or both of the bicep portion 1612 and the forearm portion 1614, such as firmness or stiffness, or other characteristic in order to support the an exercise regime of the user 1602. For example, the actuation assembly 1620 can operate in order to resist movements of user at the bicep portion 1612 and/or the forearm portion 1614 in order to facilitate resistance training. In some cases, the manipulation of the flexible fabric 1610 can occur in response to a detection of a condition of the user 1602. The condition can include the position and/or movement of the user 1602. For example in FIG. 16A, the user 1602 is shown in a first position 1601a. The actuation assembly 1620 can operate to increase resistance in the bicep portion 1612 and/or the forearm portion 1614 as the user 1302 moves between the first position 1601a and a second position 1301b, as shown in FIG. 16B. The change in resistance can occur substantially automatically and without direct input from the user 1602. This can be beneficial in order to support an exercise regime without the need for weights and other auxiliary equipment.

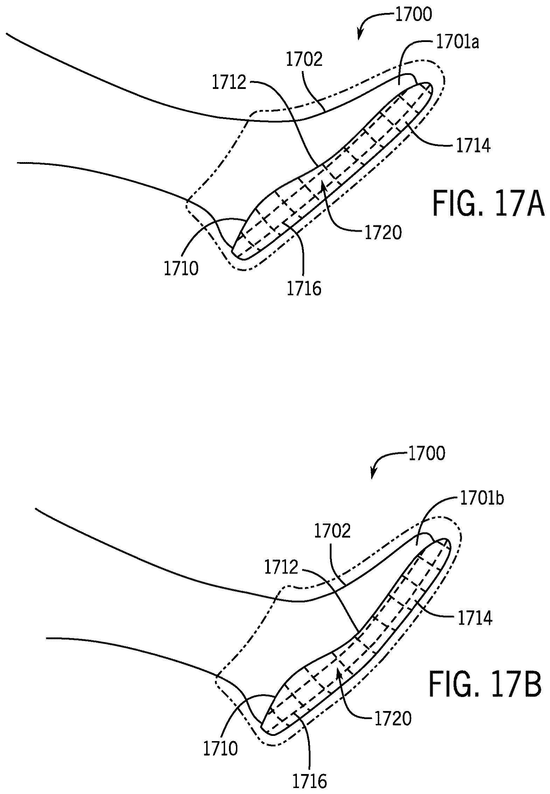

In another example, the actuation assemblies of the present disclosure can be implemented in a flexible fabric that forms a portion of an insole. For example and as shown in FIG. 17A, an insole 1700 is shown as having a flexible fabric 1710. The flexible fabric 1710 can define a stepping surface 1712 that is configured to engage a user 1702 in a standing position. The insole 1700 can be a device that is inserted into a shoe, cast, boot, or other component configured to be worn on a foot of the user 1702. In the example of FIG. 17A, the insole 1700 is shown as including a forward portion 1714 configured to engage a ball of the foot and a rear portion 1716 configured to engage an arch of the foot. In other examples, the insole can include other components that facilitate the stepping of the user 1702.

The flexible fabric 1710 can be associated an actuation assembly 1720. The actuation assembly 1720 can be substantially analogous to the actuation assemblies and modules described herein, such as the actuation module 208 of FIG. 2; redundant explanation of which is omitted here for clarity. The actuation assembly 1720 can be configured to manipulate the flexible fabric 1710. For example, the actuation assembly 1720 can be configured to change a characteristics of the stepping surface 1712, such as firmness, or other characteristic in order to support the foot of the user 1702. In some cases, the manipulation of the flexible fabric 1710 can occur in response to a detection of a condition of the user 1702. The condition can include the position and/or movement of the user 1702. Additionally or alternatively, the condition can be associated with a medical diagnoses, and the actuation assembly 1720 can be configured to manipulate the user 1702 in order to facilitate a course of treatment, including mitigation of joint pain. In some cases, the actuation assembly 1720 can be configured to manipulate the stepping surface 1712 in a manner that causes movement of the user 1702. For example in FIG. 17A, the foot of the user 1702 is shown in a first position 1701a. The actuation assembly 1720 can operate to move the foot of the user 1302 into a second position 1301b, as shown in FIG. 17B. The movement of the user 1702 can occur substantially automatically and without direct input from the user during user, including walking or running. This can be beneficial in order to provide adaptive foot support during walking, running, exercise and/or other activities, responsive to the condition of the user and the environment.

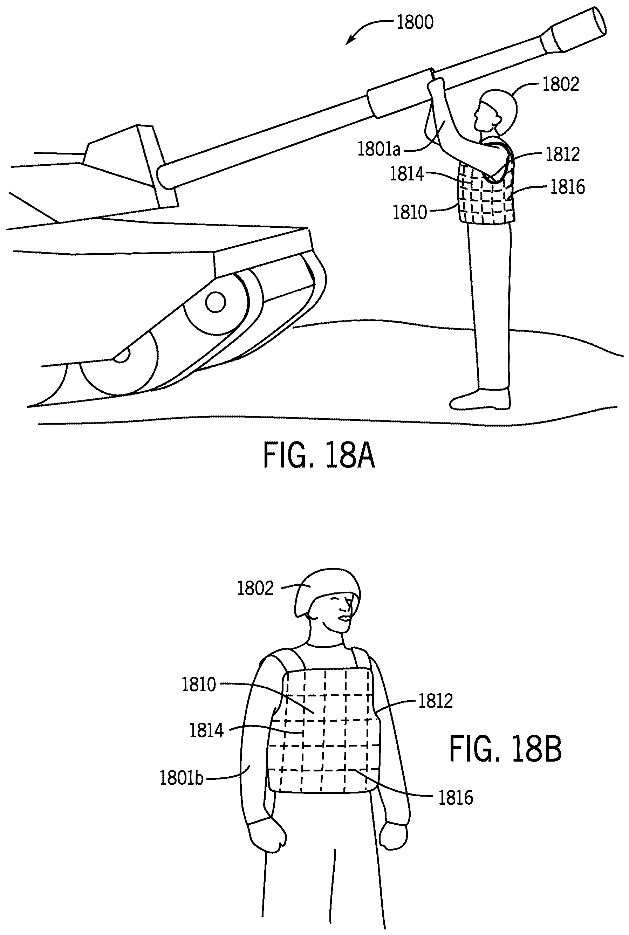

In another example, the actuation assemblies of the present disclosure can be implemented in a flexible fabric that forms a portion of a bullet-proof vest. For example and as shown in FIG. 18A, a bullet-proof vest 1800 is shown as having a flexible fabric 1810. The flexible fabric 1810 can define an interface 1812 that is configured to engage a user 1802 such that the bullet-proof vest 1800 can be worn by the user 1802. The bullet-proof vest 1800 can be upper body covering that can be used to resist a bullet. The resistance of the flexible fabric 1810 can be modified to permit movement of the user 1802 in different combat scenarios. In the example of FIG. 18A, the bullet-proof vest 1800 is shown as including a first chest portion 1814 and a second chest portion 1816. In other examples, the bullet-proof vest 1800 can include other components that facilitate the protection of the user 1802.

The flexible fabric 1810 can be associated an actuation assembly 1820. The actuation assembly 1380 can be substantially analogous to the actuation assemblies and modules described herein, such as the actuation module 208 of FIG. 2; redundant explanation of which is omitted here for clarity. The actuation assembly 1820 can be configured to manipulate the flexible fabric 1810. For example, the actuation assembly 1820 can be configured to change a characteristics of the interface 1812, such as firmness, or other characteristic in order to support the movement of the user 1802. In some cases, the manipulation of the flexible fabric 1810 can occur in response to a detection of a condition of the user 1802. The condition can include the position and/or movement of the user 1802. For example in FIG. 18A, the user 1802 is shown in a first position 1801a. The actuation assembly 1820 can operate to increase resistance in the first chest portion 1814 and/or the second chest portion 1816 as the user 1802 moves between the first position 1801a and a second position 1801b, as shown in FIG. 18B. The change in resistance of the flexible fabric 1810 can occur substantially automatically and without direct input from the user 1802. This can be beneficial in order to support a transition from a non-combat scenario, as shown in FIG. 18A, and a combat scenario, as shown in FIG. 18B.

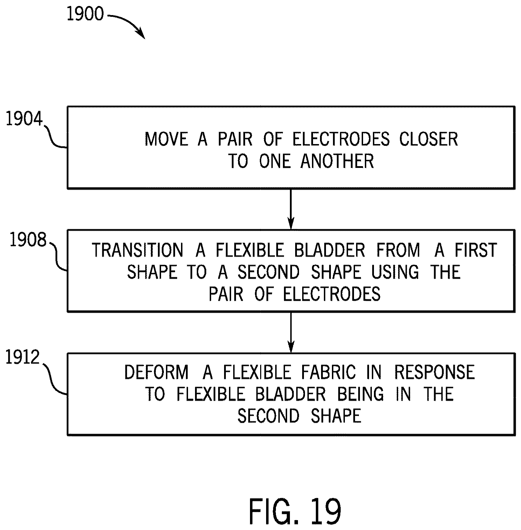

To facilitate the reader's understanding of the various functionalities of the embodiments discussed herein, reference is now made to the flow diagram in FIG. 19, which illustrates process 1900. While specific steps (and orders of steps) of the methods presented herein have been illustrated and will be discussed, other methods (including more, fewer, or different steps than those illustrated) consistent with the teachings presented herein are also envisioned and encompassed with the present disclosure.

At operation 1904, a pair of electrodes are moved closer to one another. For example and with reference to FIGS. 4A and 4B, the first electrode 424 and the second electrode 428 can be moved closer to one another. The second electrode 428 can be connected to the current supply 430. The first electrode 424 can be connected to the ground 426. An electrical charge can be applied to the first and second electrodes 424, 428. The electrical change can induce an electromagnetic field that draws the first and second electrodes 424, 428 closer to one another.

At operation 1908, a flexible bladder is transitioned from a first shape to a second shape using the pair of electrodes. For example and with reference to FIGS. 4A and 4B, the movement of the first and second electrodes 424, 428 can displace the fluid 432 within the portion of the flexible bladder 436 arranged between the electrodes 424, 428. The fluid 432 can be displaced toward opposite ends of the flexible bladder 436 and cause the bladder 436 to stretch and expand. For example, the flexible bladder 436 can transition from having a first shape with the first height h₁ to a second shape with the second, greater height h₂.

At operation 1912, a flexible fabric is deformed in response to the flexible bladder being in the second shape. For example and with reference to FIG. 4B, the transition of the flexible bladder 436 to the second shape can cause a deformation of the flexible fabric 400. The flexible bladder 436 can be arranged at least partially within a fabric region 408. The fabric region 408 can extend toward the flexible outer surface 404. The flexible bladder 437 can expand at least partially within the flexible region and cause the flexible outer surface to deform and define the manipulation portion 410. The manipulated portion 410 can have a deformed height Δₛ. A value of the deformed height Δₛ can correspond to a value of the second height h₂ of the flexible bladder 436 in the second shape.

Other examples and implementations are within the scope and spirit of the disclosure and appended claims. For example, features implementing functions can also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and Band C). Further, the term "exemplary" does not mean that the described example is preferred or better than other examples.

The foregoing description, for purposes of explanation, uses specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

Yet further aspects and embodiments of the invention are enumerated with reference to the following numbered clauses.
1. A mattress comprising:
   a sleeping surface configured to engage a user arranged in a lying position; and
   an actuation assembly configured to manipulate the sleeping surface and comprising:
      a flexible bladder containing a fluid, and
      a pair of electrodes at least partially separated by the flexible bladder,
   wherein
   the pair of electrodes are configured to manipulate the fluid for changing a shape of the flexible bladder, and
   the sleeping surface is responsive to the shape of the flexible bladder.
2. The mattress of clause 1, wherein the flexible bladder and the pair of electrodes are components of a Peano-HASEL actuator.
3. The mattress of clause 1, wherein a stiffness of the sleeping surface is responsive to the shape of the flexible bladder.
4. The mattress of clause 1, wherein
   in a first configuration, the flexible bladder has a first shape,
   in a second configuration, the flexible bladder has a second shape, and
   in response to an electrical charge, the pair of electrodes move toward one another and cause the flexible bladder to transition between the first shape and the second shape.
5. The mattress of clause 4, wherein the second shape has a height that is greater than a height of the first shape.
6. The mattress of clause 5, wherein the sleeping surface is deformed by the flexible bladder having the height of the second shape.
7. The mattress of clause 4, wherein the second shape has a length that is less than a length of the first shape.
8. The mattress of clause 7, wherein the sleeping surface is deformed by the flexible bladder having the length of the second shape.
9. The mattress of clause 1, wherein the pair of electrodes are configured to compress a portion of the flexible bladder in response to a receipt of an electrical charge, thereby displacing the fluid within the flexible bladder.
10. The mattress of clause 1, wherein
   the flexible bladder is a first flexible bladder having a first fluid,
   the pair of electrodes is a first pair of electrodes,
   the actuation assembly further comprises:
      a second flexible bladder containing a second fluid, and
      a second pair of electrodes at least partially separated by the second flexible bladder,
   the second pair of electrodes are configured to manipulate the fluid for changing a shape of the second flexible bladder, and
   the sleeping surface is response to the shape of the second flexible bladder.
11. The mattress of clause 10, wherein
   the first and second bladders form a continuous cavity having a first bulbous portion and a second bulbous portion, and
   the first and second pairs of electrodes are interposed with the first and second bulbous portions.
12. The mattress of clause 11, wherein
   the actuation assembly is a first actuation assembly, and
   the mattress further comprises a third actuation assembly arranged in a matrix with the first actuation assembly.
13. The mattress of clause 12, wherein the third actuation assembly includes a third flexible bladder arranged offset from the first and second flexible bladders of the first actuation assembly.
14. The mattress of clause 1, wherein
   the mattress further comprises a sensor configured to detect a user input, and
   the pair of electrodes are configured to manipulate the fluid for changing the shape of the flexible bladder in response to the user input.
15. The mattress of clause 14, wherein the user input comprises an audible input or a force input.
16. The mattress of clause 15, wherein
   the user input is an audible input,
   in response to the audible input exceeding a threshold value, the pair of electrodes manipulate the fluid for defining a transitioned shaped of the flexible bladder, and
   the sleeping surface is deformed by the flexible bladder being in the transitioned shape such that the sleeping surface gently rolls the user in the lying position.
17. The mattress of clause 15, wherein
   the user input is a force input,
   the force input displaces the pair of electrodes, and
   the sensor is configured to detect the user input based on a change in capacitance between the pair of electrodes.
18. A mattress comprising:
   a sleeping surface configured to engage a user arranged in a lying position; and
   an actuation assembly configured to manipulate the sleeping surface and comprising a shapeable material configured for repeated transitioning between a first shape and a second shape in response to the shapeable material receiving energy from an energy source,
   wherein the sleeping surface is responsive to the shapeable material being in the first shape or the second shape.
19. The mattress of clause 18, wherein
   the energy source comprises a light source,
   the light source is configured to emit light directed toward the shapeable material, and
   the shapeable material is configured to transition from the first shape to the second shape upon the receipt of light from the light source.
20. The mattress of clause 19, wherein the shapeable material is configured to transition from the second shape to the first shape upon the cessation of light from the light source.
21. The mattress of clause 19, wherein the light source comprises light waves in one or both of an ultraviolet or a visible spectrum.
22. The mattress of clause 18, wherein the shapeable material comprises a photopolymer or a light-activated resin.
23. The mattress of clause 18, wherein
   the energy source comprises a heat source,
   the heat source is configured to emit heat directed toward the shapeable material, and
   the shapeable material is configured to transition from the first shape to the second shape upon the receipt of heat from the heat source.
24. The mattress of clause 23, wherein the heat source is configured to emit heat via Joule heating.
25. The mattress of clause 18, wherein the shapeable material comprises a blend of high-strength polymer fishing lines and sewing thread.
26. The mattress of clause 18, wherein the shapeable material is defined by a coiled structure.
27. The mattress of clause 26, wherein
   the coiled structure has a first length when the shapeable material is in the first shape,
   the coiled structure has a second length when the shapeable material is in the second shape, and
   the second length is 50% or less than the second length.
28. The mattress of clause 18, wherein
   the shapeable material is a first shapeable material of a plurality of shapeable materials,
   the plurality of shapeable materials arranged in a base frame to collectively support the sleeping surface.
29. The mattress of clause 28, wherein
   the plurality of shapeable materials define a series of slats disposed along a length of the sleeping surface, and
   one or more slats of the series of slats extends along a width of the sleeping surface.
30. The mattress of clause 18, wherein the shapeable material defines a cilia-like structure.
31. The mattress of clause 30, wherein
   the cilia-like structure has a free end,
   the free end is in a first position when the shapeable material is in the first shape, and
   the free end is in a second position when the shapeable material is in the second shape.
32. The mattress of clause 31, wherein the sleeping surface is deformed by the free end of the cilia-like structure being in the second position.
33. The mattress of clause 30, wherein the cilia-like structure is at least partially encased in a gel.
34. The mattress of clause 18, wherein
   the actuation assembly is a first actuation assembly,
   a first portion of the sleeping surface is responsive to the first actuation assembly,
   the mattress further comprises a second actuation assembly, and
   a second portion of the sleeping surface is responsive to the second actuation assembly.
35. A flexible fabric comprising:
   a flexible outer layer;
   a pair of electrodes integrated with the flexible outer layer; and
   a flexible bladder holding a fluid;
   wherein
   the pair of electrodes are operable to compress the flexible bladder and displace the fluid, and
   the flexible outer layer is configured to stretch upon the displacement of the fluid.
36. The flexible fabric of clause 35, wherein the flexible bladder and the pair of electrodes are components of a Peano-HASEL actuator.
37. The flexible fabric of clause 35, wherein the flexible bladder and the pair of electrodes are at least partially encased in a gel.
38. The flexible fabric of clause 37, wherein the gel defines a finger-link appendage.
39. The flexible fabric of clause 38, wherein
   the pair of electrodes and the flexible bladder are components of a first actuation assembly,
   the finger-link appendage is one of a series of finger-link appendages, each having another actuation assembly.
40. The flexible fabric of clause 37, wherein the gel is enmeshed with a portion of the flexible fabric.
41. The flexible fabric of clause 35, wherein
   in a first configuration, the flexible bladder has a first shape,
   in a second configuration, the flexible bladder has a second shape, and
   in response to an electrical charge, the pair of electrodes move toward one another and cause the flexible bladder to transition between the first shape and the second shape.
42. The flexible fabric of clause 41, wherein the flexible fabric is stretched by the flexible bladder being in the second shape.
43. The flexible fabric of clause 35, wherein
   the flexible fabric further comprises a sensor configured to detect a user input, and
   the pair of electrodes are configured to manipulate the fluid for changing a shape of the flexible bladder in response to the user input.
44. A mattress comprising:
   the flexible fabric of clause 35, and
   wherein
      the flexible fabric defines sleeping surface configured to engage a user arranged in a lying position, and
      the stretching of the flexible outer layer is configured to cause movement of the user.
45. A hospital bed comprising:
   the flexible fabric of clause 35, and
   wherein
      the flexible fabric defines a recovery surface configured to engage a user arranged in a convalescing position, and
      the stretching of the flexible outer layer is configured to cause movement of the user.
46. The hospital bed of clause 45, wherein the movement is configured to rotate the user for the prevention for bed sores.
47. A surgical table comprising:
   the flexible fabric of clause 35, and
   wherein
      the flexible fabric defines a surgical surface configuration to engage a user arranged in a surgical position, and
      the stretching of the flexible outer later is configured to cause movement of the user.
48. The surgical table of clause 47, wherein the movement is configured to arrange the user into a position adapted to conduct a surgical operation on the user.
49. The surgical table of clause 48, wherein the stretching is caused in response to a signal from an computing device.
50. The surgical table of clause 49, wherein the signal is prompted in response to a preprogrammed surgical routine.
51. The surgical table of clause 49, wherein the signal is prompted in response to an input from a medical professional.
52. A car seat comprising:
   the flexible fabric of clause 35, and
   wherein
      the flexible fabric defines a sitting surface configured to engage a user arranged in a seated position, and
      the stretching of the flexible outer layer is configured to cause movement of the user.
53. A garment comprising:
   the flexible fabric of clause 35, and
   wherein
      the flexible fabric is configured to be worn by a user, and
      the stretching of the flexible outer layer is configured to resist movement of the user.
54. An insole comprising:
   the flexible fabric of clause 35, and
   wherein
      the flexible fabric defines a stepping surface configured engage a foot of a user, and
      the stretching of the flexible outer layer is configured to cause movement of the foot of the user.
55. A bullet-proof vest comprising
   the flexible fabric of clause 35, and
   wherein
      the flexible fabric is configured to be worn by a user, and
      the stretching of the flexible outer layer is configured to resist movement of the user.
56. A method for manipulating a flexible fabric, comprising:
   transitioning a flexible bladder from a first shape to a second shape by compressing a portion of the flexible bladder between a pair of electrodes, and
   in response to the flexible bladder being in the second shape, causing a deformation of a flexible fabric.
57. The method of clause 56, further comprising applying an electric charge to the pair of electrodes to move the pair of electrodes closer to one another.
58. The method of clause 56, wherein
   the method further comprises detecting a user input, the user input comprising an audible input or a force input, and
   the transitioning occurs in response to the detection of the user input.
59. The method of clause 58, wherein
   the flexible fabric defines a sleeping surface configured to engage a user arranged in a lying position,
   the user input is the audible input, and
   the method further includes, in response to the audible input, rolling the user using the deformation of the flexible fabric.
60. The method of clause 58, wherein
   the flexible fabric defines a sleeping surface configured to engage a user arranged in a lying position,
   the user input is a force input,
   the detecting of the user input further comprising detecting a pressure distribution of the user on the sleeping surface.
61. The method of clause 60, wherein the detecting of the pressure distribution comprises using a wavefront sensor to measure localized movements of the user.
62. The method of clause 56, further comprising, in response to the flexible bladder being in the second shape, pressing the flexible bladder against the flexible fabric.
63. The method of clause 56, further comprising stiffening the flexible fabric using the deformation caused by the flexible bladder being the second shape.
64. The method of clause 56, wherein
   the first shape has a first dimension,
   the second shape has a second dimension larger than the first dimension,
   the transitioning further comprises transitioning the flexible bladder into an intermediate shape having an intermediate dimension, the intermediate dimension greater than the first dimension and less than the second dimension, and
   the causing of the deformation further comprises causing an amount of deformation of the flexible fabric corresponding to a dimension of the flexible bladder being the first, second, or third dimension.
65. The method of clause 64, wherein the deformation is a localized deformation of the flexible fabric.

## Claims

1. A mattress comprising:
a sleeping surface configured to engage a user arranged in a lying position; and
an actuation assembly configured to manipulate the sleeping surface and comprising a shapeable material configured for repeated transitioning between a first shape and a second shape in response to the shapeable material receiving energy from an energy source;
wherein the sleeping surface is responsive to the shapeable material being in the first shape or the second shape.

2. The mattress of claim 1, wherein:
the energy source comprises a light source;
the light source is configured to emit light directed toward the shapeable material; and
the shapeable material is configured to transition from the first shape to the second shape upon the receipt of light from the light source.

3. The mattress of claim 2, wherein the shapeable material is configured to transition from the second shape to the first shape upon the cessation of light from the light source.

4. The mattress of claim 2, wherein the light source comprises light waves in one or both of an ultraviolet or a visible spectrum.

5. The mattress of claim 1, wherein the shapeable material comprises a photopolymer or a light-activated resin.

6. The mattress of claim 1, wherein:
the energy source comprises a heat source;
the heat source is configured to emit heat directed toward the shapeable material; and
the shapeable material is configured to transition from the first shape to the second shape upon the receipt of heat from the heat source.

7. The mattress of claim 6, wherein the heat source is configured to emit heat via Joule heating.

8. The mattress of claim 1, wherein the shapeable material is defined by a coiled structure.

9. The mattress of claim 8, wherein:
the coiled structure has a first length when the shapeable material is in the first shape;
the coiled structure has a second length when the shapeable material is in the second shape; and
the second length is 50% or less than the second length.

10. The mattress of claim 1, wherein:
the shapeable material is a first shapeable material of a plurality of shapeable materials; and
the plurality of shapeable materials arranged in a base frame to collectively support the sleeping surface.

11. The mattress of claim 10, wherein:
the plurality of shapeable materials define a series of slats disposed along a length of the sleeping surface; and
one or more slats of the series of slats extends along a width of the sleeping surface.

12. The mattress of claim 1, wherein the shapeable material defines a cilia-like structure at least partially encased in a gel.

13. The mattress of claim 12, wherein:
the cilia-like structure has a free end;
the free end is in a first position when the shapeable material is in the first shape; and
the free end is in a second position when the shapeable material is in the second shape.

14. The mattress of claim 1, wherein
the actuation assembly is a first actuation assembly,
a first portion of the sleeping surface is responsive to the first actuation assembly,
the mattress further comprises a second actuation assembly, and
a second portion of the sleeping surface is responsive to the second actuation assembly.

15. A method for manipulating a flexible fabric, the method comprising:
transitioning shapeable material between a first shape and a second shape by selectively emitting energy from an energy source toward the shapeable material; and
in response to the shapeable material transitioning between the first shape and the second shape, causing a deformation of the flexible fabric.
